# EUROPEAN PATENT APPLICATION

(11) **EP 4 064 036 A1**
(43) Date of publication of application: **28.09.2022**
(21) Application number: 20909798.9
(22) Date of filing: 29.12.2020
(51) Int. Cl.: G06F 7/57

(54) **FLOATING-POINT NUMBER MULTIPLICATION COMPUTATION METHOD AND APPARATUS, AND ARITHMETICAL LOGIC UNIT**

(30) Priority: 31.12.2019 CN 201911414534
(71) Applicant: Huawei Technologies Co., Ltd., Shenzhen, Guangdong 518129 (CN)
(72) Inventor: LIN, Tengyi, Shenzhen, Guangdong 518129 (CN); PAN, Qiuping, Shenzhen, Guangdong 518129 (CN); SHEN, Shengyu, Shenzhen, Guangdong 518129 (CN); XU, Xiaoxin, Shenzhen, Guangdong 518129 (CN); ZHANG, Wei, Shenzhen, Guangdong 518129 (CN)
(74) Representative: Kreuz, Georg Maria
(86) International application number: PCT/CN2020/140768
(87) International publication number: WO 2021/136259

(57) **Abstract**

This application discloses a floating-point number multiplication computation method and apparatus, and an arithmetic logic unit, and belongs to the data processing field. The method includes: obtaining a plurality of to-be-computed first-precision floating-point numbers (101); and decomposing each to-be-computed first-precision floating-point number to obtain at least two second-precision floating-point numbers, where precision of the second-precision floating-point number is lower than precision of the first-precision floating-point number (102); determining various combinations including two second-precision floating-point numbers obtained by decomposing different first-precision floating-point numbers (103); inputting the second-precision floating-point numbers in each combination into a second-precision multiplier to obtain an intermediate computation result corresponding to each combination (104); and determining a computation result for the plurality of to-be-computed first-precision floating-point numbers based on the intermediate computation result corresponding to each combination (105). The method may be used to save computing resources.

## Description

This application claims priority to Chinese Patent Application No. 201911414534.8, filed on December 31, 2019 and entitled "FLOATING-POINT NUMBER MULTIPLICATION COMPUTATION METHOD AND APPARATUS, AND ARITHMETIC LOGIC UNIT", which is incorporated herein by reference in its entirety.

### TECHNICAL FIELD

This application relates to the field of data processing technologies, and in particular, to a floating-point number multiplication computation method and apparatus, and an arithmetic logic unit.

### BACKGROUND

A floating-point number is an important digital format in a computer. The floating-point number in the computer includes three parts: a sign, an exponent, and a mantissa. To meet different requirements of different services for data precision, a processor of the computer usually needs to have a capability of performing a multiplication operation on floating-point numbers with different precision.

Currently, to meet multiplication requirements for floating-point numbers with different precision, a plurality of independent multipliers are usually designed corresponding to precision requirements. For example, if the processor needs to simultaneously support a half-precision multiplication operation, a single-precision multiplication operation, and a double-precision multiplication operation, at least three independent multipliers need to be designed in the processor, so that the three independent multipliers respectively meet half-precision multiplication, single-precision multiplication, and double-precision multiplication.

In a process of implementing this application, the inventor finds that the related technology has at least the following problem:

A plurality of multipliers that separately support different precision are independently designed in the processor. When a system only uses a multiplier of one type of the precision to perform computation, a multiplier of a remaining type of precision is in an idle state, which extremely wastes computing resources.

### SUMMARY

To resolve a problem of waste of computing resources in a related technology, embodiments of this application provide a floating-point number multiplication computation method and apparatus, and an arithmetic logic unit. The technical solutions are as follows.

According to a first aspect, a floating-point number multiplication computation method is provided, and the method includes:
obtaining a plurality of to-be-computed first-precision floating-point numbers;
decomposing each to-be-computed first-precision floating-point number to obtain at least two second-precision floating-point numbers, where precision of the second-precision floating-point number is lower than precision of the first-precision floating-point number;
determining various combinations including two second-precision floating-point numbers obtained by decomposing different first-precision floating-point numbers;
inputting the second-precision floating-point numbers in each combination into a second-precision multiplier to obtain an intermediate computation result corresponding to each combination; and
determining a computation result for the plurality of to-be-computed first-precision floating-point numbers based on the intermediate computation result corresponding to each combination.

In the solution shown in this embodiment of this application, a floating-point number includes three parts: a sign, an exponent, and a mantissa. An integer is 1, and may be omitted from representation of the floating-point number. A to-be-computed first-precision floating-point number may be first decomposed. Herein, that the first-precision floating-point number is decomposed is representing an integer and a mantissa of the first-precision floating-point number by the sum of a plurality of second-precision floating-point numbers. Herein, precision of the second-precision floating-point number needs to be lower than precision of first-precision. For example, if the first-precision floating-point number is a single-precision floating-point number, the second-precision floating-point number may be a half-precision floating-point number. For another example, if the first-precision floating-point number is a double-precision floating-point number, the second-precision floating-point number may be a single-precision floating-point number or a half-precision floating-point number. For a second-precision floating-point number obtained after decomposition, two second-precision floating-point numbers obtained by decomposing different first-precision floating-point numbers may be combined, and then each obtained combination is input into the second-precision multiplier configured to compute multiplication on second-precision floating-points. In this case, the second-precision multiplier may output an intermediate computation result corresponding to each group of second-precision floating-point numbers. Finally, a plurality of intermediate computation results may be processed to obtain the computation result for the plurality of to-be-computed first-precision floating-point numbers.

It may be learned that in the solution shown in this embodiment of this application, in a process of computing multiplication on first-precision floating-point numbers, a first-precision multiplier with relatively high precision does not need to be used, and only the second-precision multiplier with relatively low precision needs to be used. In other words, in addition to normally computing multiplication on second-precision floating-points, a processing unit in which only the second-precision multiplier is deployed may further compute multiplication on first-precision floating-point numbers with higher precision. In this way, computing resources can be effectively used, and costs of separately deploying the first-precision multiplier can be saved.

In a possible implementation, after the decomposing each to-be-computed first-precision floating-point number to obtain at least two second-precision floating-point numbers, the method further includes:
determining an exponent bias value corresponding to each second-precision floating-point number.

The determining a computation result for the plurality of to-be-computed first-precision floating-point numbers based on the intermediate computation result corresponding to each combination includes:
adjusting, based on the exponent bias value corresponding to the second-precision floating-point number in each combination, an exponent of the intermediate computation result corresponding to each combination, to obtain an adjusted intermediate computation result; and
performing a summation operation on the adjusted intermediate computation results corresponding to all the combinations, to obtain the computation result for the plurality of first-precision floating-point numbers.

In the solution shown in this embodiment of this application, when the first-precision floating-point number is decomposed, mantissas with different bits of the first-precision floating-point number need to be separately represented by using second-precision floating-point numbers. In addition, the exponent bias value corresponding to each second-precision floating-point number may be further obtained. The exponent bias value may include an exponent of the first-precision floating-point number, and may further include a fixed exponent bias value that is of the mantissa represented by the second-precision floating-point number and that is in the first-precision floating-point number. The fixed exponent bias value is described below.

For example, for a single-precision floating-point number 0 10000000 00000010100000100110011, a sign is "0", an exponent is "10000000", and a mantissa is "00000010100000100110011". If a half-precision floating-point number needs to be used to represent the 11^{st} bit to the 21^{st} bit "00001001100" in the mantissa, and a number that actually needs to be represented is "0.00000000000 0001001100", a fixed exponent bias value -11 may be extracted.

Correspondingly, the exponent corresponding to the intermediate computation result corresponding to each combination needs to be adjusted by using the exponent bias value corresponding to the second-precision floating-point number. Finally, the adjusted intermediate computation results may be input into an accumulator for accumulation computation to obtain a final computation result.

In a possible implementation, the adjusting, based on the exponent bias value corresponding to the second-precision floating-point number in each combination, an exponent of the intermediate computation result corresponding to each combination, to obtain an adjusted intermediate computation result includes:
adding the exponent of the intermediate computation result corresponding to each combination of second-precision floating-point numbers and the exponent bias value corresponding to the second-precision floating-point number in each combination, to obtain the adjusted intermediate computation result.

In the solution shown in this embodiment of this application, each second-precision floating-point number corresponds to an exponent bias value. After the intermediate result obtained by using the second-precision multiplier is obtained, for the intermediate computation result corresponding to each combination, an exponent bias value of each second-precision floating-point number that does not participate in computation and the exponent of the intermediate computation result need to be added to obtain an adjusted intermediate computation result.

In a possible implementation, the intermediate computation result is a first-precision intermediate computation result, and the computation result is a first-precision computation result.

In the solution shown in this embodiment of this application, for multiplication computation on first-precision floating-point numbers, the first-precision computation result may still be obtained, that is, precision is not reduced.

In a possible implementation, the first-precision floating-point number is a single-precision floating-point number, the second-precision floating-point number is a half-precision floating-point number, the first-precision intermediate computation result is a single-precision intermediate computation result, the first-precision computation result is a single-precision computation result, and the second-precision multiplier is a half-precision multiplier; or
the first-precision floating-point number is a double-precision floating-point number, the second-precision floating-point number is a single-precision floating-point number, the first-precision intermediate computation result is a double-precision intermediate computation result, the first-precision computation result is a double-precision computation result, and the second-precision multiplier is a single-precision multiplier.

In the solution shown in this embodiment of this application, a single-precision computation result may be finally obtained for a to-be-computed single-precision floating-point number by using a half-precision multiplier, and single-precision multiplication computation can be implemented without using a single-precision multiplier, thereby saving computing resources. A double-precision computation result may also be finally obtained for a to-be-computed double-precision floating-point number by using a single-precision multiplier, and double-precision multiplication computation can be implemented without using a double-precision multiplier, thereby saving computing resources.

In a possible implementation, the inputting the second-precision floating-point numbers in each combination into a second-precision multiplier to obtain an intermediate computation result corresponding to each combination includes:
inputting the second-precision floating-point numbers in each combination into the second-precision multiplier to obtain a first-precision intermediate computation result corresponding to each combination, and performing format conversion on each first-precision intermediate computation result to obtain a third-precision intermediate computation result corresponding to each combination, where precision of the third-precision intermediate computation result is higher than precision of the first-precision intermediate computation result.

The adjusting, based on the exponent bias value corresponding to the second-precision floating-point number in each combination, an exponent of the intermediate computation result corresponding to each combination, to obtain an adjusted intermediate computation result includes:
adjusting, based on the exponent bias value corresponding to the second-precision floating-point number in each combination, an exponent of the third-precision intermediate computation result corresponding to each combination, to obtain an adjusted third-precision intermediate computation result.

The performing a summation operation on the adjusted intermediate computation results corresponding to all the combinations, to obtain the computation result for the plurality of first-precision floating-point numbers includes:
performing a summation operation on the adjusted third-precision intermediate computation results corresponding to all the combinations, to obtain a third-precision computation result for the plurality of first-precision floating-point numbers.

In the solution shown in this embodiment of this application, for multiplication computation on first-precision floating-point numbers, the third-precision computation result with higher precision may be obtained.

In a possible implementation, the performing format conversion on each first-precision intermediate result to obtain a third-precision intermediate computation result corresponding to each combination of second-precision floating-point numbers includes:
performing zero padding processing on an exponent and a mantissa of each first-precision intermediate result to obtain the third-precision intermediate computation result corresponding to each combination.

In the solution shown in this embodiment of this application, only the first-precision intermediate computation result can be obtained after the second-precision floating-point number is processed by the second-precision multiplier. Therefore, if the third-precision computation result with higher precision needs to be finally obtained, a format of the first-precision intermediate computation result needs to be extended to the third-precision intermediate computation result. An extension method may be that a zero is padded after a last bit in each of the exponent and the mantissa.

In a possible implementation, the first-precision floating-point number is a single-precision floating-point number, the second-precision floating-point number is a half-precision floating-point number, the first-precision intermediate computation result is a single-precision intermediate computation result, the third-precision intermediate computation result is a double-precision intermediate computation result, the third-precision computation result is a double-precision computation result, and the second-precision multiplier is a half-precision multiplier.

In the solution shown in this embodiment of this application, a double-precision computation result may be finally obtained for a to-be-computed single-precision floating-point number by using a half-precision multiplier, and single-precision multiplication computation can be implemented without using a single-precision multiplier, thereby saving computing resources.

In a possible implementation, the inputting the second-precision floating-point numbers in each combination into a second-precision multiplier to obtain an intermediate computation result corresponding to each combination includes:
inputting the second-precision floating-point numbers in each combination into the second-precision multiplier to obtain a third-precision intermediate computation result corresponding to each combination, and performing format conversion on each third-precision intermediate computation result to obtain a first-precision intermediate computation result corresponding to each combination.

The adjusting, based on the exponent bias value corresponding to the second-precision floating-point number in each combination, an exponent of the intermediate computation result corresponding to each combination, to obtain an adjusted intermediate computation result includes:
adjusting, based on the exponent bias value corresponding to the second-precision floating-point number in each combination, an exponent of the first-precision intermediate computation result corresponding to each combination, to obtain an adjusted first-precision intermediate computation result.

The performing a summation operation on the adjusted intermediate computation results corresponding to all the groups of second-precision floating-point numbers, to obtain the computation result for the plurality of first-precision floating-point numbers includes:
performing a summation operation on the adjusted first-precision intermediate computation results corresponding to all the groups of second-precision floating-point numbers, to obtain a first-precision computation result for the plurality of first-precision floating-point numbers.

In the solution shown in this embodiment of this application, after the second-precision floating-point number is processed by using the second-precision floating-point number multiplier, the first-precision intermediate computation result may be unable to be directly obtained, but only the third-precision intermediate computation result can be obtained. In this case, to ensure that precision of a final computation result is still first precision, a format of the third-precision intermediate computation result may be extended to obtain the first-precision intermediate result, so that the first-precision computation result is finally obtained.

In a possible implementation, the first-precision floating-point number is a double-precision floating-point number, the second-precision floating-point number is a half-precision floating-point number, the third-precision intermediate computation result is a single-precision intermediate computation result, the first-precision intermediate computation result is a double-precision intermediate computation result, the first-precision computation result is a double-precision computation result, and the second-precision multiplier is a half-precision multiplier.

In the solution shown in this embodiment of this application, a single-precision intermediate computation result may be obtained for a to-be-computed double-precision floating-point number by using a half-precision multiplier. After a format of the single-precision intermediate computation result is adjusted, a double-precision computation result is finally obtained. Multiplication computation on double-precision floating-point numbers can be implemented without using a double-precision multiplier, thereby saving computing resources.

According to a second aspect, a floating-point number multiplication computation apparatus is provided, and the apparatus includes:
an obtaining module, configured to obtain a plurality of to-be-computed first-precision floating-point numbers;
a decomposition module, configured to decompose each to-be-computed first-precision floating-point number to obtain at least two second-precision floating-point numbers, where precision of the second-precision floating-point number is lower than precision of the first-precision floating-point number;
a combination module, configured to determine various combinations including two second-precision floating-point numbers obtained by decomposing different first-precision floating-point numbers;
an input module, configured to input the second-precision floating-point numbers in each combination into a second-precision multiplier to obtain an intermediate computation result corresponding to each combination; and
a determining module, configured to determine a computation result for the plurality of to-be-computed first-precision floating-point numbers based on the intermediate computation result corresponding to each combination.

In a possible implementation, the decomposition module is further configured to:
determine an exponent bias value corresponding to each second-precision floating-point number.

The determining module is configured to:
adjust, based on the exponent bias value corresponding to the second-precision floating-point number in each combination, an exponent of the intermediate computation result corresponding to each combination, to obtain an adjusted intermediate computation result; and
perform a summation operation on the adjusted intermediate computation results corresponding to all the combinations, to obtain the computation result for the plurality of first-precision floating-point numbers.

In a possible implementation, the determining module is configured to:
add the exponent of the intermediate computation result corresponding to each combination of second-precision floating-point numbers and the exponent bias value corresponding to the second-precision floating-point number in each combination, to obtain the adjusted intermediate computation result.

In a possible implementation, the intermediate computation result is a first-precision intermediate computation result, and the computation result is a first-precision computation result.

In a possible implementation, the first-precision floating-point number is a single-precision floating-point number, the second-precision floating-point number is a half-precision floating-point number, the first-precision intermediate computation result is a single-precision intermediate computation result, the first-precision computation result is a single-precision computation result, and the second-precision multiplier is a half-precision multiplier; or
the first-precision floating-point number is a double-precision floating-point number, the second-precision floating-point number is a single-precision floating-point number, the first-precision intermediate computation result is a double-precision intermediate computation result, the first-precision computation result is a double-precision computation result, and the second-precision multiplier is a single-precision multiplier.

In a possible implementation, the input module is configured to:
input the second-precision floating-point numbers in each combination into the second-precision multiplier to obtain a first-precision intermediate computation result corresponding to each combination, and perform format conversion on each first-precision intermediate computation result to obtain a third-precision intermediate computation result corresponding to each combination, where precision of the third-precision intermediate computation result is higher than precision of the first-precision intermediate computation result.

The determining module is configured to:
adjust, based on the exponent bias value corresponding to the second-precision floating-point number in each combination, an exponent of the third-precision intermediate computation result corresponding to each combination, to obtain an adjusted third-precision intermediate computation result; and
perform a summation operation on the adjusted third-precision intermediate computation results corresponding to all the combinations, to obtain a third-precision computation result for the plurality of first-precision floating-point numbers.

In a possible implementation, the input module is configured to:
perform zero padding processing on an exponent and a mantissa of each first-precision intermediate result to obtain the third-precision intermediate computation result corresponding to each combination.

In a possible implementation, the first-precision floating-point number is a single-precision floating-point number, the second-precision floating-point number is a half-precision floating-point number, the first-precision intermediate computation result is a single-precision intermediate computation result, the third-precision intermediate computation result is a double-precision intermediate computation result, the third-precision computation result is a double-precision computation result, and the second-precision multiplier is a half-precision multiplier.

In a possible implementation, the input module is configured to:
input the second-precision floating-point numbers in each combination into the second-precision multiplier to obtain a third-precision intermediate computation result corresponding to each combination, and perform format conversion on each third-precision intermediate computation result to obtain a first-precision intermediate computation result corresponding to each combination.

The determining module is configured to:
adjust, based on the exponent bias value corresponding to the second-precision floating-point number in each combination, an exponent of the first-precision intermediate computation result corresponding to each combination, to obtain an adjusted first-precision intermediate computation result; and
perform a summation operation on the adjusted first-precision intermediate computation results corresponding to all the groups of second-precision floating-point numbers, to obtain a first-precision computation result for the plurality of first-precision floating-point numbers.

In a possible implementation, the first-precision floating-point number is a double-precision floating-point number, the second-precision floating-point number is a half-precision floating-point number, the third-precision intermediate computation result is a single-precision intermediate computation result, the first-precision intermediate computation result is a double-precision intermediate computation result, the first-precision computation result is a double-precision computation result, and the second-precision multiplier is a half-precision multiplier.

According to a third aspect, an arithmetic logic unit is provided, and the arithmetic logic unit includes a floating-point number decomposition circuit, a second-precision multiplier, an exponent adjustment circuit, and an accumulator.

The floating-point number decomposition circuit is configured to: decompose each input to-be-computed first-precision floating-point number into at least two second-precision floating-point numbers, and output, to the exponent adjustment circuit, an exponent bias value corresponding to each second-precision floating-point number, where precision of the second-precision floating-point number is lower than precision of the first-precision floating-point number.

The second-precision multiplier is configured to: receive a combination including two second-precision floating-point numbers obtained by decomposing different first-precision floating-point numbers, perform a multiplication operation on the second-precision floating-point numbers in each combination, and output, to the exponent adjustment circuit, an intermediate computation result corresponding to each combination.

The exponent adjustment circuit is configured to: adjust, based on the exponent bias value corresponding to the second-precision floating-point number in each input combination, an exponent of the intermediate computation result corresponding to each input combination; and output an adjusted intermediate computation result to the accumulator.

The accumulator is configured to: perform a summation operation on the adjusted intermediate computation results corresponding to all the input combinations, and output a computation result for the plurality of first-precision floating-point numbers.

In a possible implementation, the exponent adjustment circuit is configured to: add the exponent bias value corresponding to the second-precision floating-point number in each input combination and the exponent of the intermediate computation result corresponding to each input combination, and output an adjusted intermediate computation result to the accumulator.

In a possible implementation, the intermediate computation result is a first-precision intermediate computation result, and the computation result is a first-precision computation result.

In a possible implementation, the first-precision floating-point number is a single-precision floating-point number, the second-precision floating-point number is a half-precision floating-point number, the first-precision intermediate computation result is a single-precision intermediate computation result, the first-precision computation result is a single-precision computation result, and the second-precision multiplier is a half-precision multiplier; or
the first-precision floating-point number is a double-precision floating-point number, the second-precision floating-point number is a single-precision floating-point number, the first-precision intermediate computation result is a double-precision intermediate computation result, the first-precision computation result is a double-precision computation result, and the second-precision multiplier is a single-precision multiplier.

In a possible implementation, the arithmetic logic unit further includes a format conversion circuit.

The second-precision multiplier is specifically configured to: perform a multiplication operation on the second-precision floating-point numbers in each combination, and output, to the format conversion circuit, a first-precision intermediate computation result corresponding to each combination.

The format conversion circuit is configured to: perform format conversion on each input first-precision intermediate computation result, and output, to the exponent adjustment circuit, a third-precision intermediate computation result corresponding to each combination, where precision of the third-precision intermediate computation result is higher than precision of the first-precision intermediate computation result.

The exponent adjustment circuit is configured to: adjust, based on the exponent bias value corresponding to the second-precision floating-point number in each input combination, an exponent of the third-precision intermediate computation result corresponding to each input combination; and output an adjusted third-precision intermediate computation result to the accumulator.

The accumulator is configured to: perform a summation operation on the adjusted third-precision intermediate computation results corresponding to all the input combinations, and output a third-precision computation result for the plurality of first-precision floating-point numbers.

In a possible implementation, the format conversion circuit is configured to:
perform zero padding processing on an exponent and a mantissa of each input first-precision intermediate computation result, and output, to the exponent adjustment circuit, the third-precision intermediate computation result corresponding to each combination.

In a possible implementation, the first-precision floating-point number is a single-precision floating-point number, the second-precision floating-point number is a half-precision floating-point number, the first-precision intermediate computation result is a single-precision intermediate computation result, the third-precision intermediate computation result is a double-precision intermediate computation result, the third-precision computation result is a double-precision computation result, and the second-precision multiplier is a half-precision multiplier.

In a possible implementation, the arithmetic logic unit further includes a format conversion circuit.

The second-precision multiplier is configured to: perform a multiplication operation on the second-precision floating-point numbers in each combination, and output, to the format conversion circuit, a third-precision intermediate computation result corresponding to each combination.

The format conversion circuit is configured to: perform format conversion on each input third-precision intermediate computation result, and output, to the exponent adjustment circuit, a first-precision intermediate computation result corresponding to each combination.

The exponent adjustment circuit is configured to: adjust, based on the exponent bias value corresponding to the second-precision floating-point number in each input combination, an exponent of the first-precision intermediate computation result corresponding to each input combination; and output an adjusted first-precision intermediate computation result to the accumulator.

The accumulator is configured to: perform a summation operation on the adjusted first-precision intermediate computation results corresponding to all the input combinations, and output a first-precision computation result for the plurality of first-precision floating-point numbers.

In a possible implementation, the first-precision floating-point number is a double-precision floating-point number, the second-precision floating-point number is a half-precision floating-point number, the third-precision intermediate computation result is a single-precision intermediate computation result, the first-precision intermediate computation result is a double-precision intermediate computation result, the first-precision computation result is a double-precision computation result, and the second-precision multiplier is a half-precision multiplier.

In a possible implementation, the arithmetic logic unit further includes a computation mode switching circuit.

The computation mode switching circuit is configured to: when the computation mode switching circuit is set to a second-precision floating-point number computation mode, set the floating-point number decomposition circuit and the exponent adjustment circuit to be invalid.

The second-precision multiplier is configured to: receive a plurality of groups of to-be-computed second-precision floating-point numbers that are input from the outside of the arithmetic logic unit, perform a multiplication operation on each group of second-precision floating-point numbers, and input an intermediate computation result corresponding to each group of to-be-computed second-precision floating-point numbers.

The accumulator is configured to: perform a summation operation on the intermediate computation results corresponding to all the input groups of to-be-computed second-precision floating-point numbers, and output a computation result for the plurality of groups of to-be-computed second-precision floating-point numbers.

According to a fourth aspect, an electronic device is provided, and the electronic device includes a processor and a memory. The memory stores at least one instruction, and the instruction is loaded and executed by the processor to implement the operation performed in the floating-point number multiplication computation method according to the first aspect.

According to a fifth aspect, a processor is provided, and the processor includes the arithmetic logic unit according to the third aspect.

According to a sixth aspect, a computer-readable storage medium is provided. The computer-readable storage medium stores at least one instruction, and the instruction is loaded and executed by a processor to implement the operation performed in the floating-point number multiplication computation method according to the first aspect.

Beneficial effects of the technical solutions provided in the embodiments of this application are as follows:

In the embodiments of this application, each to-be-computed first-precision floating-point number is decomposed to obtain a plurality of second-precision floating-point numbers with relatively low precision. Then, various combinations including two second-precision floating-point numbers obtained by decomposing different first-precision floating-point numbers are input into the second-precision multiplier, to obtain an intermediate computation result corresponding to each combination. Finally, a computation result corresponding to the to-be-computed first-precision floating-point number is determined based on the intermediate computation result corresponding to each combination. It may be learned that in the embodiments of this application, a plurality of first-precision floating-point numbers with relatively high precision may be computed by the second-precision multiplier with relatively low precision, and the first-precision multiplier does not need to be used any longer. Therefore, the first-precision floating-point number with relatively high precision may be computed in a device having only the second-precision multiplier with relatively low precision, and the first-precision multiplier does not need to be additionally designed, thereby effectively saving computing resources.

### BRIEF DESCRIPTION OF DRAWINGS

FIG. 1 is a flowchart of a floating-point number multiplication computation method according to an embodiment of this application;
FIG. 2 is a schematic diagram of composition of a floating-point number according to an embodiment of this application;
FIG. 3 is a schematic diagram of composition of a floating-point number according to an embodiment of this application;
FIG. 4 is a schematic diagram of composition of a floating-point number according to an embodiment of this application;
FIG. 5 is a schematic diagram of inputting a second-precision floating-point number into a second-precision multiplier according to an embodiment of this application;
FIG. 6 is a schematic diagram of inputting a second-precision floating-point number into a second-precision multiplier according to an embodiment of this application;
FIG. 7 is a schematic diagram of a structure of a floating-point number multiplication computation apparatus according to an embodiment of this application;
FIG. 8 is a schematic diagram of a structure of an electronic device according to an embodiment of this application;
FIG. 9 is a flowchart of a floating-point number multiplication computation method according to an embodiment of this application;
FIG. 10 is a flowchart of a floating-point number multiplication computation method according to an embodiment of this application;
FIG. 11 is a flowchart of a floating-point number multiplication computation method according to an embodiment of this application;
FIG. 12 is a schematic diagram of a structure of an arithmetic logic unit according to an embodiment of this application;

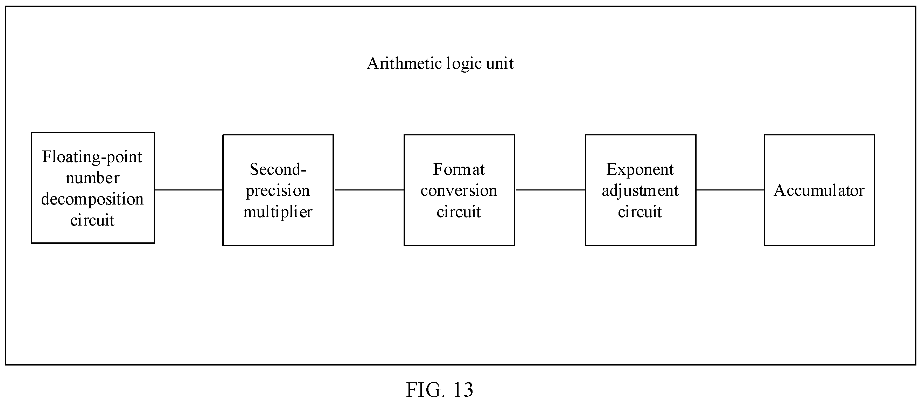

FIG. 13 is a schematic diagram of a structure of an arithmetic logic unit according to an embodiment of this application; and
FIG. 14 is a schematic diagram of a structure of an arithmetic logic unit according to an embodiment of this application.

### DESCRIPTION OF EMBODIMENTS

Embodiments of this application provide a floating-point number multiplication computation method. The method may be implemented by an electronic device, and the electronic device may be any device that needs to perform floating-point number computation. For example, the electronic device may be a mobile terminal such as a mobile phone or a tablet computer, may be a computer device such as a desktop computer or a notebook computer, or may be a server. However, floating-point number computation may be related to many fields such as graphics processing, astronomy, and medicine. In all the fields, when the foregoing type of electronic device is used to perform floating-point number computation, the method provided in the embodiments of this application can be used. A high-precision floating-point number is decomposed to obtain a low-precision floating-point number, and then a low-precision multiplier is used to compute the obtained low-precision floating-point number, to finally obtain a high-precision computation result. Computation that only can be completed by a high-precision multiplier in a related technology can be completed by using a low-precision multiplier without loss of precision.

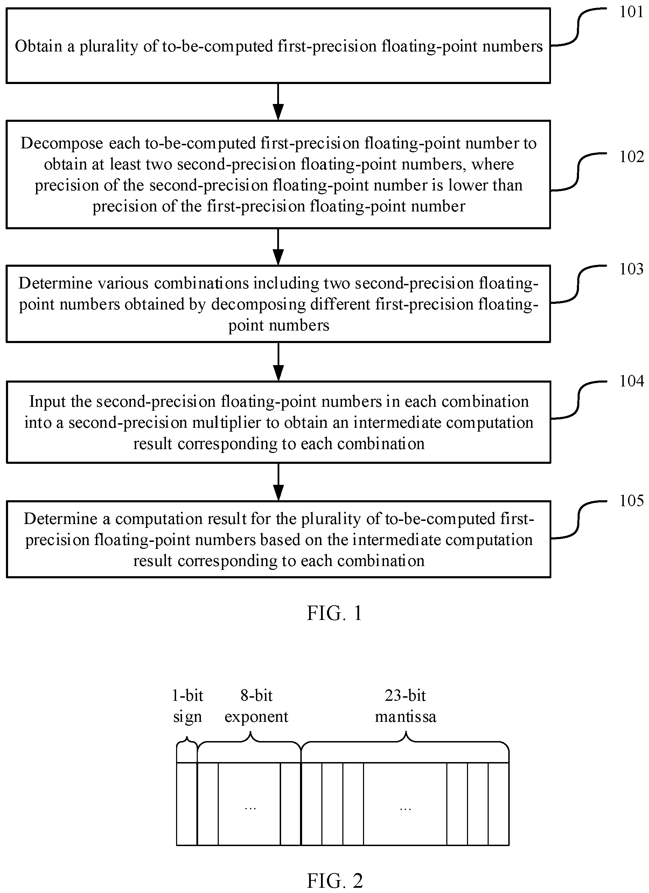

Referring to FIG. 1, an embodiment of this application provides a floating-point number multiplication computation method. A processing procedure of the method may include the following steps.

Step 101: Obtain a plurality of to-be-computed first-precision floating-point numbers.

The plurality of to-be-computed first-precision floating-point numbers may be a group of first-precision floating-point numbers on which a multiplication operation needs to be performed. "The plurality of" may be two or more than two. In this embodiment of this application, that "the plurality of" is two is used for description.

In implementation, a processor in a computer device may obtain the plurality of to-be-computed first-precision floating-point numbers. The first-precision floating-point number may be a single-precision floating-point number, a double-precision floating-point number, or the like.

Step 102: Decompose each to-be-computed first-precision floating-point number to obtain at least two second-precision floating-point numbers, where precision of the second-precision floating-point number is lower than precision of the first-precision floating-point number.

In implementation, each to-be-computed first-precision floating-point number may be decomposed to obtain a plurality of second-precision floating-point numbers, and precision of the second-precision floating-point number is lower than precision of the first-precision floating-point number. There are a plurality of possible cases for the first-precision floating-point number and the second-precision floating-point number, and several cases are enumerated below: The first-precision floating-point number may be a single-precision floating-point number (single-precision floating-point format, FP32), and the second-precision floating-point number may be a half-precision floating-point number (half-precision floating-point format, FP16). Alternatively, the first-precision floating-point number may be a double-precision floating-point number (double-precision floating-point format, FP64), and the second-precision floating-point number may be an FP32 or may be an FP16. The foregoing several cases are separately described below.

Case 1: In a case in which the first-precision floating-point number is an FP32 and the second-precision floating-point number is an FP16, that the FP32 is decomposed to obtain a plurality of FP16s may have the following cases.

### I. One FP32 is decomposed to obtain three FP16s.

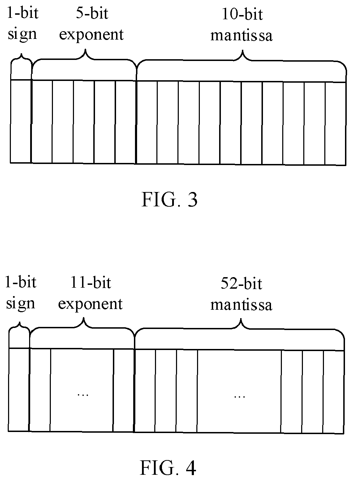

Currently, composition of an FP32 in a standard format is shown in FIG. 2, and includes a 1-bit (bit) sign, an 8-bit exponent (also referred to as an exponent), and a 23-bit mantissa. In addition, there is an omitted 1-bit integer, and the omitted integer is 1. For an FP32 in a standard format, there are totally 24 bits when the integer and the mantissa are added. Composition of an FP16 in a standard format is shown in FIG. 3, and includes a 1-bit sign, a 5-bit exponent, and a 10-bit mantissa. In addition, there is an omitted 1-bit integer, and the omitted integer is 1. For an FP16 in a standard format, there are totally 11 bits when the integer and the mantissa are added. If an FP32 in a standard format needs to be decomposed to obtain an FP16 in a standard format, three FP16s in a standard format are required.

The integer and the mantissa of the FP32 in a standard format may be divided into three parts. A first part includes the integer and the first 10 bits of the mantissa, a second part includes the 11^{st} bit to the 21^{st} bit of the mantissa, and a third part includes the 22^{nd} bit and the 23^{rd} bit of the mantissa. The three parts each are represented by an FP16 in a standard format. It should be noted herein that when the 22^{nd} bit and the 23^{rd} of the mantissa in the third part are represented by an FP16 in a standard format, nine zeros may be first padded after the 23^{rd} bit of the mantissa, that is, the 22^{nd} bit and the 23^{rd} bit of the mantissa and the padded zeros are represented by an FP16 in a standard format.

In addition, an exponent range of the FP16 is from -15 to 15, which may indicate that a decimal point can move 15 bits to the left and can move 15 bits to the right. When the FP16 in a standard format is used to represent the first part of the FP32, a fixed exponent bias value is 0; when the FP16 in a standard format is used to represent the second part of the FP32, a fixed exponent bias value is -11; and when the FP16 in a standard format is used to represent the third part of the FP32, a fixed exponent bias value is -22. It may be learned that when the third part is represented, the corresponding fixed exponent bias value only exceeds the exponent range of the FP16. Therefore, a corresponding fixed exponent bias value may be extracted for an exponent of each FP16 in a standard format.

Therefore, an FP32 in a standard format may be represented as follows:
*A*₁ =2^{*EA*₁} (*a*₀+2^{-*S*₁}*a*₁+2^{-2*S*₁}*a*₂) , where *A*₁ is the FP32 in a standard format; *EA*₁ is an exponent of *A*₁; *a*₀, *a*₁, and *a*₂ are three FP16s in a standard format that are obtained through decomposition; and *S*₁ is a smallest fixed exponent bias value. For the FP16 in a standard format, *S*₁=11.

In addition, a common exponent bias value may be extracted for exponents of all the FP16s in a standard format. Therefore, an FP32 in a standard format may alternatively be represented as follows:
*A*₁*=*2^{*EA*₁*-S*₁} (*a*₀*'*+*a*₁*'*+*a*₂*'*) , where *a*₀', *a*₁', and *a*₂*'* are three FP16s in a standard format that are obtained through decomposition. In the foregoing two representation methods, the FP16s obtained through decomposition have the following relationships: *a*₀=2^{-*S*₁}*a*₀', *a*₁=*a*₁', and *a*₂=2^{*S*₁}*a*₂'.

### II. One FP32 is decomposed to obtain two FP16s.

To decrease a quantity of FP16s obtained through decomposition, a current FP16 in a standard format may be adjusted. A mantissa of the FP16 is adjusted to 13 bits, and bit quantities of a sign and an exponent remain unchanged. An adjusted FP16 may be referred to as an FP16 in a non-standard format. In this case, there are totally 14 bits when an integer and a mantissa of the FP16 in a non-standard format are added. Therefore, if a mantissa of an FP32 in a standard format needs to be represented by using an FP16 in a non-standard format, only two FP16s in a non-standard format are required.

An integer and a mantissa of an FP32 in a standard format are divided into two parts. A first part includes the integer and the first 13 bits of the mantissa, and a second part includes the 14^{th} bit to the 23^{rd} bit. The two parts each are represented by an FP16 in a non-standard format.

It should be further noted herein that when the second part is represented by a non-standard FP16, four zeros may be first padded after the 23^{rd} bit of the mantissa, that is, the 14^{th} bit to the 23^{rd} bit of the mantissa and the padded zeros are represented by an FP16 in a non-standard format. The same as Case 1, herein, a corresponding fixed exponent bias value may also be extracted for each FP16 in a standard format.

Therefore, an FP32 in a standard format may alternatively be represented as follows:
A₂₌2^{*EA*₂} (*a*₃+2^{-*S*₂}*a*₄) , where *A*₂ is the FP32 in a standard format; *EA*₂ is an exponent of *A*₂; *a*₃ and *a*₄ are two FP16s in a non-standard format that are obtained through decomposition; and *S*₂ is a fixed exponent bias value. For the FP16 in a non-standard format, *S*₂=14.

In addition, a common exponent bias value may be extracted for exponents of all the FP16s in a standard format. Therefore, an FP32 in a standard format may alternatively be represented as follows:
*A*₂=2^{*EA*₂-*S*₂} (*a*₃'+*a*₄') , where *a*₃' and *a*₄' are two FP16s in a non-standard format that are obtained through decomposition. In the foregoing two representation methods, the FP16s obtained through decomposition have the following relationships: *a*₃=2^{-*S*₂}*a*₃', and *a*₄=*a*₄'.

Case 2: In a case in which the first-precision floating-point number is an FP64 and the second-precision floating-point number is an FP32, that the FP64 is decomposed to obtain a plurality of FP32s may have the following cases.

### I. One FP64 is decomposed to obtain three FP32s.

Currently, composition of an FP64 in a standard format is shown in FIG. 4, and includes a 1-bit (bit) sign, an 11-bit exponent (also referred to as an exponent), and a 52-bit mantissa. In addition, there is an omitted 1-bit integer, and the omitted integer is 1. For an FP64 in a standard format, there are totally 53 bits when an integer and a mantissa are added. For the FP32 in a standard format described above, there are totally 24 bits when an integer and a mantissa are added. If an FP64 in a standard format needs to be decomposed to obtain an FP32 in a standard format, three FP32s in a standard format are required.

The integer and the mantissa of the FP64 in a standard format may be divided into three parts. A first part includes the integer and the first 23 bits of the mantissa, a second part includes the 24^{th} bit to the 47^{th} bit of the mantissa, and a third part includes the 48^{th} bit to the 52^{nd} bit of the mantissa. The three parts each are represented by an FP32 in a standard format.

It should be further noted herein that when the 47^{th} bit to the 52^{nd} bit of the mantissa in the third part are represented by an FP32 in a standard format, 18 zeros may be first padded after the 23^{rd} bit of the mantissa, that is, the 47^{th} bit to the 52^{nd} bit of the mantissa and the padded zeros are represented by an FP32 in a standard format.

Therefore, an FP64 in a standard format may be represented as follows:
*A*₃=2^{*EA*₃} (*a*₅+*a*₆+*a*₇) , where *A*₃ is the FP64 in a standard format; *EA*₃ is an exponent of *A*₃; and *a*₅, *a*₆*,* and *a*₇ are three FP32s in a standard format that are obtained through decomposition.

### II. One FP64 is decomposed to obtain two FP32s.

To decrease a quantity of FP32s obtained through decomposition, a current FP32 in a standard format may be adjusted. A mantissa of the FP32 is adjusted to 26 bits, and bit quantities of a sign and an exponent remain unchanged. An adjusted FP32 may be referred to as an FP32 in a non-standard format. In this case, there are totally 27 bits when an integer and a mantissa of the FP32 in a non-standard format are added. Therefore, if a mantissa of an FP64 in a standard format needs to be represented by using an FP32 in a non-standard format, only two FP32s in a non-standard format are required.

An integer and a mantissa of the FP64 in a standard format are divided into two parts. A first part includes the integer and the first 26 bits of the mantissa, and a second part includes the 27^{th} bit to the 53^{rd} bit. The two parts each are represented by an FP32 in a non-standard format.

Therefore, an FP64 in a standard format may alternatively be represented as follows:
*A*₄=2^{*EA*₄} (*a*₈+*a*₉) , where *A*₄ is the FP32 in a standard format; *EA*₄ is an exponent of *A*₄; and *a*₈ and *a*₉ are two FP32s in a non-standard format that are obtained through decomposition.

Case 3: In a case in which the first-precision floating-point number is an FP64 and the second-precision floating-point number is an FP16, that the FP64 is decomposed to obtain a plurality of FP16s may have the following cases.

### I. One FP64 is decomposed to obtain five FP16s.

For an FP64 in a standard format, there are totally 53 bits when an integer and a mantissa are added. For the FP32 in a standard format described above, there are totally 24 bits when an integer and a mantissa are added. If an FP64 in a standard format needs to be decomposed to obtain an FP16 in a standard format, five FP16s in a standard format are required.

The integer and the mantissa of the FP64 in a standard format may be divided into five parts. A first part includes the integer and the first 10 bits of the mantissa, a second part includes the 11^{st} bit to the 21^{st} bit of the mantissa, a third part includes the 22^{nd} bit to the 32^{nd} bit of the mantissa, a fourth part includes the 33^{rd} bit to the 43^{rd} bit of the mantissa, and a fifth part includes the 44^{th} bit to the 52^{nd} bit of the mantissa. The five parts each are represented by an FP64 in a standard format. It should be further noted herein that when the 44^{th} bit to the 52^{nd} bit of the mantissa in the fifth part are represented by an FP16 in a standard format, two zeros may be first padded after the 52^{nd} bit of the mantissa, that is, the 44^{th} bit to the 52^{nd} bit of the mantissa and the padded zeros are represented by an FP16 in a standard format.

In addition, an exponent range of the FP16 is from -15 to 15, which may indicate that a decimal point can move 15 bits to the left and can move 15 bits to the right. When the FP16 in a standard format is used to represent the first part of the FP64, a fixed exponent bias value is 0; when the FP16 in a standard format is used to represent the second part of the FP64, a fixed exponent bias value is -11; when the FP16 in a standard format is used to represent the third part of the FP64, a fixed exponent bias value is -22; when the FP16 in a standard format is used to represent the fourth part of the FP64, a fixed exponent bias value is -33; and when the FP16 in a standard format is used to represent the fifth part of the FP64, a fixed exponent bias value is -44. It may be learned that when the third part, the fourth part, and the fifth part are represented, the corresponding fixed exponent bias value only exceeds the exponent range of the FP16. Therefore, a corresponding fixed exponent bias value may be extracted for an exponent of each FP16 in a standard format.

Therefore, an FP64 in a standard format may be represented as follows: *A*₅ = 2^{*EA*₅} (*a*₁₀+2^{-*S*₁}*a*₁₁+2^{-2*S*₁}*a*₁₂+2^{-3*S*₁}*a*₁₃+2^{-4*S*₁}*a*₁₄) , where *A*₅ is the FP64 in a standard format; *EA₅* is an exponent of *A*₅; *a*_{10,} *a*₁₁, *a*₁₂, *a*₁₃, and *a*₁₄ are five FP16s in a standard format that are obtained through composition; and *S*₁ is a smallest fixed exponent bias value. For the FP16 in a standard format, *S*₁=11.

### II. One FP64 is decomposed to obtain four FP16s.

Similarly, the FP64 may be decomposed to obtain the foregoing FP16 in a non-standard format. If a mantissa of an FP64 in a standard format is represented by using an FP16 in a non-standard format, only four FP16s in a non-standard format are required.

An integer and the mantissa of the FP64 in a standard format are divided into four parts. A first part includes the integer and the first 13 bits of the mantissa, a second part includes the 14^{th} bit to the 27^{th} bit, a third part includes the 28^{th} bit to the 41^{st} bit, and a fourth part includes the 42^{nd} bit to the 52^{nd} bit.

It should be further noted herein that when the 42^{nd} bit to the 52^{nd} bit of the mantissa in the fourth part are represented by an FP16 in a non-standard format, three zeros may be first padded after the 52^{nd} bit of the mantissa, that is, the 42^{nd} bit to the 52^{nd} bit of the mantissa and the padded zeros are represented by an FP16 in a standard format. In addition, an exponent range of the FP16 is from -15 to 15, which may indicate that a decimal point can move 15 bits to the left and can move 15 bits to the right. When the FP16 in a non-standard format is used to represent the first part of the FP64, a fixed exponent bias value is 0; when the FP16 in a non-standard format is used to represent the second part of the FP64, a fixed exponent bias value is -14; when the FP16 in a non-standard format is used to represent the third part of the FP64, a fixed exponent bias value is -28; and when the FP16 in a non-standard format is used to represent the fourth part of the FP64, a fixed exponent bias value is -42. It may be learned that when the third part and the fourth part are represented, the corresponding fixed exponent bias value only exceeds the exponent range of the FP16. Therefore, a corresponding fixed exponent bias value may be extracted for an exponent of each FP16 in a non-standard format.

Therefore, an FP64 in a standard format may alternatively be represented as follows: *A*₆ = 2^{*EA*₆} (*a*₁₅+2^{-*S*₂}*a*₁₆+2^{-2*S*₂}*a*₁₇+2^{-3*S*₂}*a*₁₈) , where *A*₆ is the FP64 in a standard format; *EA*₆ is an exponent of *A*₆; *a*₁₅, *a*₁₆, *a*₁₇, and *a*₁₈ are four FP16s in a non-standard format that are obtained through composition; and *S*₂ is a smallest fixed exponent bias value. For the FP16 in a standard format, *S*₂=-14.

Step 103: Determine various combinations including two second-precision floating-point numbers obtained by decomposing different first-precision floating-point numbers.

In implementation, every two of second-precision floating-point numbers obtained by decomposing different first-precision floating-point numbers are combined. An example in which two FP32s each are decomposed to obtain a plurality of FP16s, two FP64s each are decomposed to obtain a plurality of FP32s, and two FP64s each are decomposed to obtain a plurality of FP16s is used below for description.

Case 1: Two FP32s each are decomposed to obtain a plurality of FP16s.
I. Two FP32s in a standard format each are decomposed to obtain three FP16s in a standard format. The two FP32s are respectively *A*₁ and *B*₁, where *A*₁ may be decomposed to obtain *a*₀, *a*₁, and *a*₂; and *B*₁ may be decomposed to obtain *b*₀, *b*₁, and *b*₂. Therefore, there may be the following combinations between *a*₀, *a*_{1,} *a*₂, *b*₀, *b*₁, and *b*₂: *a*₀*b*₀, *a*₀*b*₁*, a*₁*b*₀*_{,} a*₀*b*₂, *a*₁*b*₁, *a*₂*b*₀*, a*₁*b*₂*_{,} a*₂*b*₁ and *a*₂*b*₂.
II. Two FP32s in a standard format each are decomposed to obtain two FP16s in a non-standard format. The two FP32s are respectively *A*₂ and *B*₂, where *A*₂ may be decomposed to obtain *a*₃ and *a*₄; and *B*₂ may be decomposed to obtain *b*₃ and *b*₄. Therefore, there may be the following combinations between *a*₃, *a*₄, *b*₃, and *b*₄: *a*₃*b*₃, *a*₃*b*₄, *a*₄*b*₃, and *a*₄*b̅*₄.

Case 2: Two FP64s each are decomposed to obtain a plurality of FP32s.
I. Two FP64s in a standard format each are decomposed to obtain three FP32s in a standard format. The two FP64s are respectively *A*₃ and *B*₃, where *A*₃ may be decomposed to obtain *a*₅, *a*₆, and *a*₇; and *B*₃ may be decomposed to obtain *b*₅ , *b*₆, and *b*₇. Therefore, there may be the following combinations between *a*₅, *a*₆, *a*₇, *b*₅, *b*₆, and *b*₇: *a*₅*b*₅, *a*₅*b*₆, *a*₆*b*₅, *a*₅*b*₇, *a*₆*b*₆, *a*₇*b*₅, *a*₆*b*₇, *a*₇*b*₆, and *a*₇*b*₇.
II. Two FP64s in a standard format each are decomposed to obtain two FP32s in a non-standard format. The two FP64s are respectively *A*₄ and *B*₃, where *A*₄ may be decomposed to obtain *a*₈ and *a*₉; and *B*₄ may be decomposed to obtain *b*₈ and *b*₉. Therefore, there may be the following combinations between *a*₈, *a*₉, *b*₈ , and *b*₉: *a*₈*b*₈, *a*₈*b*₉*, a*₉*b*₈*, and a*₉*b*_{9.}

Case 3: Two FP64s each are decomposed to obtain a plurality of FP16s.
I. Two FP64s in a standard format each are decomposed to obtain five FP16s in a standard format. The two FP64s are respectively *A*₅ and *B*₅, where *A*₅ may be decomposed to obtain *a*₁₀, *a*₁₁, *a*₁₂, *a*₁₃, and *a*₁₄; and *B*₅ may be decomposed to obtain *b*₁₀, *b*₁₁, *b*₁₂, *b*₁₃, and *b*₁₄. Therefore, there may be 25 combinations between *a*₁₀, *a*₁₁, *a*₁₂, *a*₁₃, *a*₁₄, *b*₁₀, *b*₁₁, *b*₁₂, *b*₁₃, and *b*₁₄, such as *a*₁₀*b*₁₀, *a*₁₀*b*₁₁, *a*₁₁*b*₁₀, *a*₁₀*b*₁₂, *a*₁₁*b*₁₁, *a*₁₂*b*₁₀, ..., and *a*₁₄*b*₁₄. Combination manners herein are the same as those in the foregoing, and are not enumerated one by one herein.
II. Two FP64s in a standard format each are decomposed to obtain four FP16s in a non-standard format. The two FP64s are respectively *A*₆ and *B₆,* where *A*₆ may be decomposed to obtain (*a*₁₅, *a*₁₆, *a*₁₇, and *a*₁₈; and *B*₆ may be decomposed to obtain *b*₁₅, *b*₁₆, *b*₁₇, and *b*₁₈. Therefore, there may be 16 combinations between *a*₁₅, *a*₁₆, *a*₁₇, *a*_{18,} *b*₁₅, *b*₁₆, *b*₁₇, and *b*₁₈, such as *a*₁₅*b*₁₅, *a*₁₅*b*₁₆, *a*₁₆*b*₁₅, ..., and *a*₁₈*b*₁₈. Combination manners herein are the same as those in the foregoing, and are not enumerated one by one herein.

Step 104: Input the second-precision floating-point numbers in each combination into a second-precision multiplier to obtain an intermediate computation result corresponding to each combination.

In implementation, each obtained combination is input into the second-precision multiplier for computation to obtain the intermediate computation result corresponding to the combination. For different second-precision floating-point numbers, output intermediate computation results also have different precision. For example, if the first-precision floating-point number is an FP32, the intermediate computation result is an FP64; or if the first-precision floating-point number is an FP16, the intermediate computation result is an FP32. A quantity of second-precision multipliers may be the same as or may be different from a quantity of combinations of second-precision floating-point numbers.

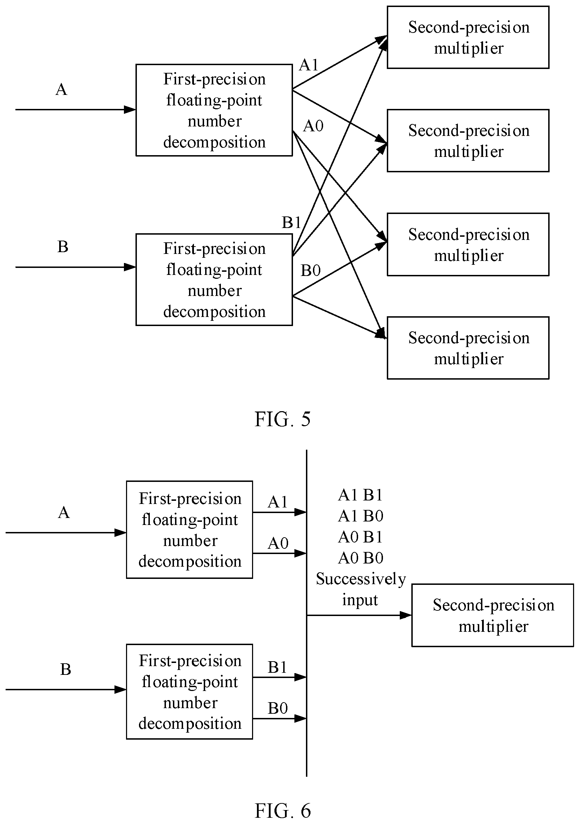

When the quantity of second-precision multipliers is the same as the quantity of combinations of second-precision floating-point numbers, as shown in FIG. 5, two first-precision floating-point numbers A and B each are decomposed to obtain two second-precision floating-point numbers: A1 and A0, and B1 and B0. Four combinations may be obtained for A1, A0, B1, and B0, and there are four second-precision multipliers. Each combination of second-precision floating-point numbers is input into a second-precision multiplier, that is, each combination corresponds to a second-precision floating-point number.

When the quantity of second-precision multipliers is different from the quantity of combinations of second-precision floating-point numbers, as shown in FIG. 6, two first-precision floating-point numbers A and B each are decomposed to obtain two second-precision floating-point numbers: A1 and A0, and B1 and B0. Four combinations may be obtained for A1, A0, B1, and B0, and there is only one second-precision multiplier. In this case, the four combinations of second-precision floating-point numbers are sequentially input into the second-precision multiplier.

Step 105: Determine a computation result for the plurality of to-be-computed first-precision floating-point numbers based on the intermediate computation result corresponding to each combination.

In implementation, when the first-precision floating-point number is decomposed to obtain the second-precision floating-point number, an exponent bias value corresponding to each second-precision floating-point number may be further obtained. In several cases in which the to-be-computed first-precision floating-point number is decomposed in step 102, exponent bias values corresponding to the second-precision floating-point number are separately described below.

Case 1: The first-precision floating-point number is an FP32, and the second-precision floating-point number is an FP16.

### I. One FP32 is decomposed to obtain three FP16s.

In this case, the FP32 may be represented as follows: *A*₁ = 2^{*EA*₁} (*a*₀+2^{-S₁}*a*₁+2^{-2*S*₁}*a*₂) Therefore, an exponent bias value corresponding to *a*₀ is *EA*₁*,* an exponent bias value corresponding to *a*₁ is *EA*₁-*S*₁*,* and an exponent bias value corresponding to *a*₂ is *EA*₁-2*S*₁. Alternatively, the FP32 may be represented as follows: *A*₁=2^{*EA*₁-*S*₁} (*a*₀'+*a*₁'+*a*₂'). Therefore, exponent bias values corresponding to *a*₀*', a*₁', and (*a*₂' each are *EA*₁*-S*₁.

### II. One FP32 is decomposed to obtain two FP16s.

In this case, the FP32 may be represented as follows: *A*₂=2^{*EA*₂} (*a*₃+2^{-*S*₂}*a*₄). Therefore, an exponent bias value corresponding to *a*₃ is *EA*₂, and an exponent bias value corresponding to *a*₄ is *EA*₂-*S*₂. Alternatively, the FP32 may be represented as follows: *A*₂=2^{*EA*₂-*S*₂} (*a*₃'+*a*₄'). Therefore, exponent bias values corresponding to *a*₃' and *a*₄' each are *EA*₂-*S*₂.

Case 2: The first-precision floating-point number is an FP64, and the second-precision floating-point number is an FP32.

### I. One FP64 is decomposed to obtain three FP32s.

In this case, the FP64 may be represented as follows: *A*₃=2^{*EA*₃} (*a*₅+*a*₆+*a*₇) . Therefore, exponent bias values corresponding to *a*₅, *a*₆, and *a*₇ each are *EA*₃*.*

### II. One FP64 is decomposed to obtain two FP32s.

In this case, the FP64 may be represented as follows: *A*₄=2^{*EA*₄} (*a*₈+*a*₉) . Therefore, exponent bias values corresponding to *a*₈ and *a*₉ each are *EA*₄.

Case 3: In a case in which the first-precision floating-point number is an FP64 and the second-precision floating-point number is an FP16, that the FP64 is decomposed to obtain a plurality of FP16s may have the following cases.

### I. One FP64 is decomposed to obtain five FP16s.

In this case, the FP64 may be represented as follows: *A*₅ = 2^{*EA*₅} (*a*₁₀+2^{-*S*₁}*a*₁₁+2^{-2*S*₁}*a*₁₂+2^{-3*S*₁}*a*₁₃+2^{-4*S*₁}*a*₁₄) . Therefore, an exponent bias value corresponding to *a*₁₀ is *EA*₅, an exponent bias value corresponding to *a*₁₁ is *EA*₅-*S*₁, an exponent bias value corresponding to *a*₁₂ is *EA*₅-2*S*₁, an exponent bias value corresponding to *a*₁₃ is *EA*₅-3*S*₁, and an exponent bias value corresponding to *a*₁₄ is *EA*₅-4*S*₁.

II. One FP64 is decomposed to obtain four FP16s.

In this case, the FP64 may be represented as follows: *A*₆ = 2^{*EA*₆} (*a*₁₅+2^{*-S*₂}*a*₁₆+2^{-2*S*₂}*a*₁₇+2^{-3*S*₂}*a*₁₈). Therefore, an exponent bias value corresponding to *a*₁₅ is *EA*₆*,* an exponent bias value corresponding to *a*₁₆ is *EA*₆-*S*₂, an exponent bias value corresponding to *a*₁₇ is *EA*₆-2*S*₂, and an exponent bias value corresponding to *a*₁₈ is *EA*₆-3*S*₂.

Correspondingly, for the intermediate computation result corresponding to each combination, an exponent of the intermediate computation result corresponding to each combination may be adjusted based on the exponent bias value corresponding to the second-precision floating-point number in each combination, to obtain an adjusted intermediate computation result. Then, the adjusted intermediate computation results are accumulated to obtain a computation result. During accumulation herein, the adjusted intermediate computation results may be input into an accumulator to obtain the computation result.

When the exponent of the intermediate computation result is adjusted, the exponent of the intermediate computation result corresponding to each combination of second-precision floating-point numbers and the exponent bias value corresponding to the second-precision floating-point number in each combination may be added to obtain the adjusted intermediate computation result.

In a possible implementation, a format of a second-precision intermediate computation result that is output by the second-precision multiplier may be adjusted to finally obtain a computation result with higher precision. Corresponding processing may be as follows: The second-precision floating-point numbers in each combination are input into the second-precision multiplier to obtain a first-precision intermediate computation result corresponding to each combination of second-precision floating-point numbers, and format conversion is performed on each first-precision intermediate computation result to obtain a third-precision intermediate computation result corresponding to each combination of second-precision floating-point numbers, where precision of the third-precision intermediate computation result is higher than precision of the first-precision intermediate computation result. An exponent of the third-precision intermediate computation result corresponding to each combination of second-precision floating-point numbers is adjusted based on the exponent bias value corresponding to the second-precision floating-point number in each combination, to obtain an adjusted third-precision intermediate computation result. A summation operation is performed on the adjusted third-precision intermediate computation results corresponding to all the groups of second-precision floating-point numbers, to obtain a third-precision computation result for the plurality of first-precision floating-point numbers.

When format conversion is performed on the first-precision computation result, zero padding processing may be performed on an exponent and a mantissa of each first-precision intermediate result to obtain the third-precision intermediate computation result corresponding to each combination of second-precision floating-point numbers.

For example, if the first-precision floating-point number is an FP32 and the second-precision floating-point number is an FP16, the first-precision intermediate computation result that is output by the second-precision multiplier is also an FP32. A format of the first-precision intermediate computation result may be adjusted to the third-precision intermediate computation result, and the third-precision intermediate computation result may be an FP64. To be specific, three zeros are padded after an end bit of an exponent of the first-precision intermediate computation result to extend a quantity of exponent bits from 8 bits to 11 bits, and the quantity of exponent bits is the same as a quantity of exponent bits of the FP64. For a mantissa of the first-precision intermediate computation result, 29 zeros are padded after an end bit to extend a quantity of mantissa bits from 23 bits to 52 bits, and the quantity of mantissa bits is the same as a quantity of mantissa bits of the FP64.

Then, after the exponent of the third-precision intermediate computation result is adjusted, the adjusted intermediate computation results are accumulated to obtain the third-precision computation result. Similarly, during accumulation herein, the adjusted intermediate computation results may be input into the accumulator to obtain the computation result.

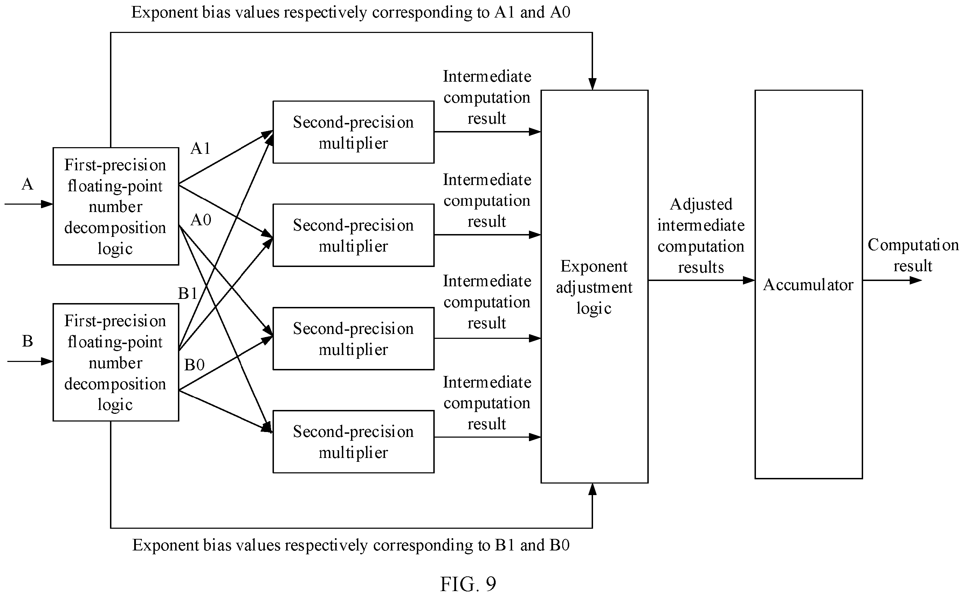

Herein, to better reflect an overall procedure of the solution in the embodiments of this application, multiplication computation on first-precision floating-point numbers A and B is used as an example for description. FIG. 9 is a schematic flowchart of a floating-point number multiplication computation method according to an embodiment of this application.

First-precision floating-point number decomposition logic is separately inputted for A and B, to separately perform first-precision floating-point number decomposition on A and B, to obtain second-precision floating-point numbers A1 and A0 that correspond to A and exponent bias values respectively corresponding to A1 and A0, and obtain second-precision floating-point numbers B1 and B0 that correspond to B and exponent bias values respectively corresponding to B1 and B0. The decomposition logic may be implemented by using a logic circuit of hardware. For a specific decomposition method, refer to step 102.

Then, the second-precision floating-point numbers obtained by decomposing different first-precision floating-point numbers are combined, and each obtained combination is input into a second-precision multiplier to obtain an intermediate computation result corresponding to the combination. For a specific combination method, refer to step 103. For a specific method for computing the intermediate computation result, refer to step 104.

Further, exponent adjustment logic is executed for the intermediate computation result corresponding to each combination, and an exponent of the intermediate computation result is adjusted by using the exponent bias value corresponding to the second-precision floating-point number in the combination, to obtain an adjusted intermediate computation result. For a specific step, refer to the adjustment method in step 105. The foregoing exponent adjustment may be performed by an exponent adjustment logic circuit.

Finally, the adjusted intermediate computation results corresponding to all the combinations may be input into an accumulator for accumulation to obtain a final computation result. For a specific step, refer to the method description in step 105. The accumulator is a hardware accumulator circuit.

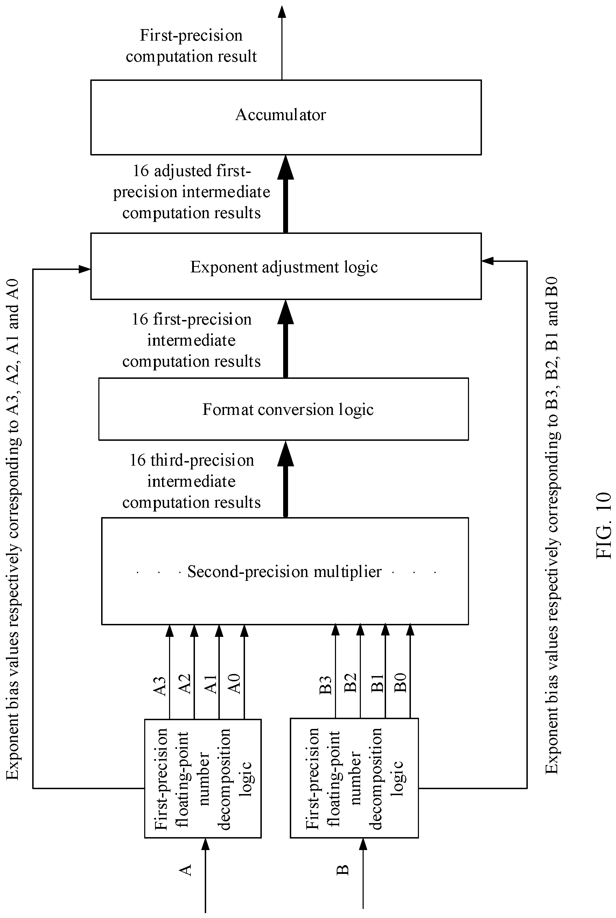

Similarly, to better reflect an overall procedure of the solution in the embodiments of this application, multiplication computation on first-precision floating-point numbers A and B is used as an example for description. FIG. 10 is a schematic flowchart of another floating-point number multiplication computation method according to an embodiment of this application.

First-precision floating-point number decomposition logic is separately inputted for A and B, to separately perform first-precision floating-point number decomposition on A and B, to obtain a plurality of second-precision floating-point numbers A3, A2, A1, and A0 that correspond to A and exponent bias values respectively corresponding to A3, A2, A1, and A0, and obtain a plurality of second-precision floating-point numbers B3, B2, B1, and B0 that correspond to B and exponent bias values respectively corresponding to B3, B2, B1, and B0. The decomposition logic may be implemented by using a logic circuit of hardware. For a specific decomposition method, refer to step 102.

Then, the second-precision floating-point numbers obtained by decomposing different first-precision floating-point numbers are combined, and each obtained combination is input into a second-precision multiplier to obtain a third-precision intermediate computation result corresponding to the combination. For a specific combination method, refer to step 103. For a specific method for computing the intermediate computation result, refer to step 104.

Further, format conversion logic is executed for the third-precision intermediate computation result corresponding to each combination, to convert a format of the third-precision intermediate computation result corresponding to each combination into a first-precision intermediate computation result. For a specific step, refer to the format conversion method in step 105. The foregoing format conversion may be performed by a format conversion logic circuit.

Further, exponent adjustment logic is executed for the first-precision intermediate computation result corresponding to each combination, and an exponent of the first-precision intermediate computation result is adjusted by using the exponent bias value corresponding to the second-precision floating-point number in the combination, to obtain an adjusted first-precision intermediate computation result. For a specific step, refer to the adjustment method in step 105. The foregoing exponent adjustment may be performed by an exponent adjustment logic circuit.

Finally, the adjusted first-precision intermediate computation results corresponding to all the combinations may be input into an accumulator for accumulation to obtain a final first-precision computation result. For a specific step, refer to the method description in step 105. The accumulator is a hardware accumulator circuit.

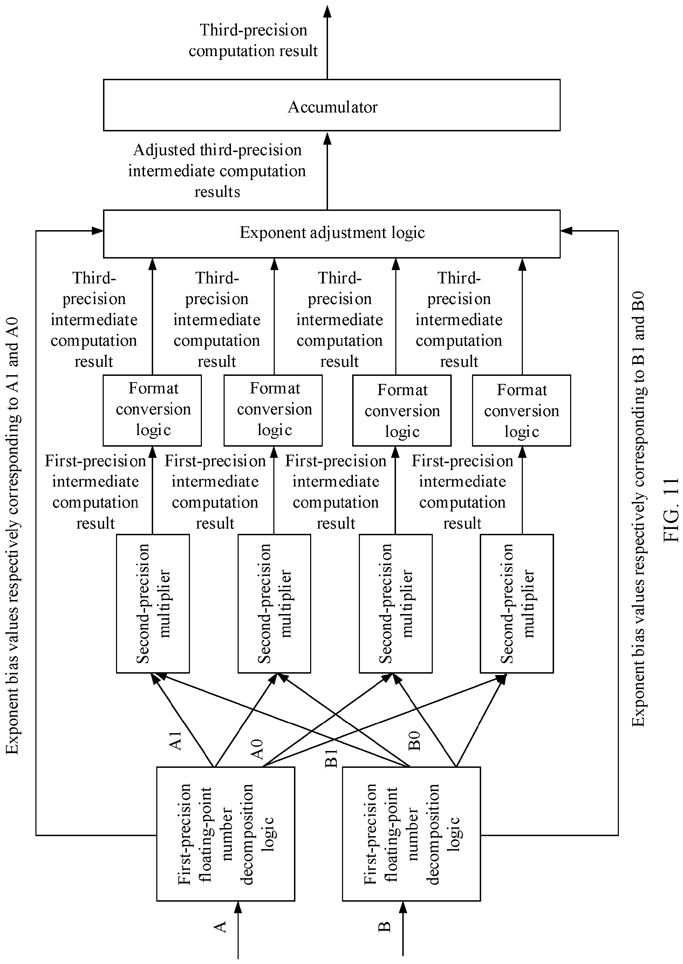

Similarly, to better reflect an overall procedure of the solution in the embodiments of this application, multiplication computation on first-precision floating-point numbers A and B is used as an example for description. FIG. 11 is a schematic flowchart of another floating-point number multiplication computation method according to an embodiment of this application.

First-precision floating-point number decomposition logic is separately inputted for A and B, to separately perform first-precision floating-point number decomposition on A and B, to obtain a plurality of second-precision floating-point numbers A1 and A0 that correspond to A and exponent bias values respectively corresponding to A1 and A0, and obtain a plurality of second-precision floating-point numbers B1 and B0 that correspond to B and exponent bias values respectively corresponding to B1 and B0. The decomposition logic may be implemented by using a logic circuit of hardware. For a specific decomposition method, refer to step 102.

Then, the second-precision floating-point numbers obtained by decomposing different first-precision floating-point numbers are combined, and each obtained combination is input into a second-precision multiplier to obtain a first-precision intermediate computation result corresponding to the combination. For a specific combination method, refer to step 103. For a specific method for computing the intermediate computation result, refer to step 104.

Further, format conversion logic is executed for the first-precision intermediate computation result corresponding to each combination, to convert a format of the first-precision intermediate computation result corresponding to each combination into a third-precision intermediate computation result. For a specific step, refer to the format conversion method in step 105. The foregoing format conversion may be performed by a format conversion logic circuit.

Further, exponent adjustment logic is executed for the third-precision intermediate computation result corresponding to each combination, and an exponent of the third-precision intermediate computation result is adjusted by using the exponent bias value corresponding to the second-precision floating-point number in the combination, to obtain an adjusted third-precision intermediate computation result. For a specific step, refer to the adjustment method in step 105. The foregoing exponent adjustment may be performed by an exponent adjustment logic circuit.

Finally, the adjusted third-precision intermediate computation results corresponding to all the combinations may be input into an accumulator for accumulation to obtain a final third-precision computation result. For a specific step, refer to the method description in step 105. The accumulator is a hardware accumulator circuit.

In addition, it should be further noted that the floating-point number computation method provided in the embodiments of this application may be used to compute a floating-point number whose precision is higher than or equal to second precision. Herein, the second precision refers to precision of a floating-point number whose computation is supported by the second-precision multiplier.

For example, the second-precision multiplier is a half-precision multiplier, that is, precision of a floating-point number whose computation is supported is half precision. Therefore, in the embodiments of this application, computation of a half-precision floating-point number, a single-precision floating-point number, a double-precision floating-point number, and a floating-point number with higher precision can be implemented. It may be understood that for computation of a half-precision floating-point number, the half-precision floating-point number does not need to be decomposed, and it is only required to input a to-be-computed half-precision floating-point number into a half-precision multiplier. However, computation of a single-precision floating-point number and a floating-point number with higher precision may be implemented by using the foregoing floating-point number multiplication computation method.

In the embodiments of this application, a plurality of first-precision floating-point numbers with relatively high precision may be computed by the second-precision multiplier with relatively low precision, and a first-precision multiplier does not need to be used any longer. Therefore, the first-precision floating-point number with relatively high precision may be computed in a device having only the second-precision multiplier with relatively low precision, and the first-precision multiplier does not need to be additionally designed, thereby effectively saving computing resources.

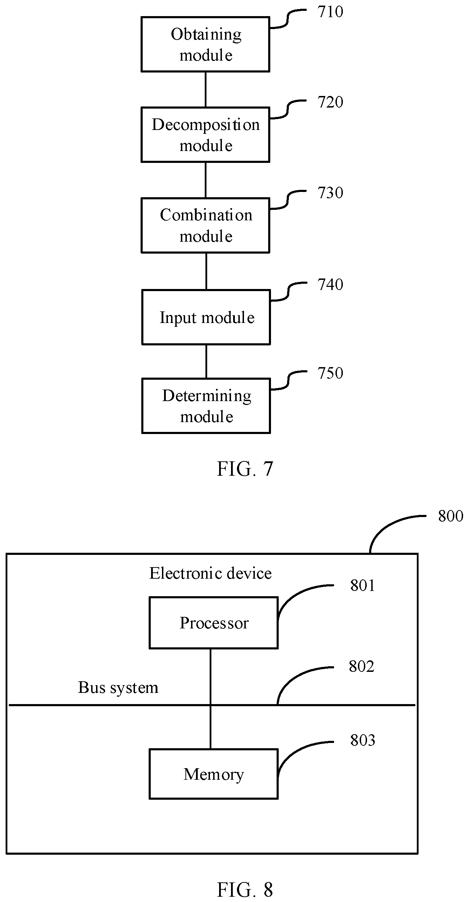

Based on the same technical concept, an embodiment of this application further provides a floating-point number multiplication computation apparatus. As shown in FIG. 7, the apparatus includes an obtaining module 710, a decomposition module 720, a combination module 730, an input module 740, and a determining module 750.

The obtaining module 710 is configured to obtain a plurality of to-be-computed first-precision floating-point numbers, and may specifically implement the obtaining function in step 201 and another implicit step.

The decomposition module 720 is configured to decompose each to-be-computed first-precision floating-point number to obtain at least two second-precision floating-point numbers, and may specifically implement the decomposition function in step 202 and another implicit step, where precision of the second-precision floating-point number is lower than precision of the first-precision floating-point number.

The combination module 730 is configured to determine various combinations including two second-precision floating-point numbers obtained by decomposing different first-precision floating-point numbers, and may specifically implement the combination function in step 203 and another implicit step.

The input module 740 is configured to input the second-precision floating-point numbers in each combination into a second-precision multiplier to obtain an intermediate computation result corresponding to each combination, and may specifically implement the input function in step 204 and another implicit step.

The determining module 750 is configured to determine a computation result for the plurality of to-be-computed first-precision floating-point numbers based on the intermediate computation result corresponding to each combination, and may specifically implement the determining function in step 205 and another implicit step.

In a possible implementation, the decomposition module 720 is further configured to:
determine an exponent bias value corresponding to each second-precision floating-point number.

The determining module 750 is configured to:
adjust, based on the exponent bias value corresponding to the second-precision floating-point number in each combination, an exponent of the intermediate computation result corresponding to each combination, to obtain an adjusted intermediate computation result; and
perform a summation operation on the adjusted intermediate computation results corresponding to all the combinations, to obtain the computation result for the plurality of first-precision floating-point numbers.

In a possible implementation, the determining module 750 is configured to:
add the exponent of the intermediate computation result corresponding to each combination of second-precision floating-point numbers and the exponent bias value corresponding to the second-precision floating-point number in each combination, to obtain the adjusted intermediate computation result.

In a possible implementation, the intermediate computation result is a first-precision intermediate computation result, and the computation result is a first-precision computation result.

In a possible implementation, the first-precision floating-point number is a single-precision floating-point number, the second-precision floating-point number is a half-precision floating-point number, the first-precision intermediate computation result is a single-precision intermediate computation result, the first-precision computation result is a single-precision computation result, and the second-precision multiplier is a half-precision multiplier; or
the first-precision floating-point number is a double-precision floating-point number, the second-precision floating-point number is a single-precision floating-point number, the first-precision intermediate computation result is a double-precision intermediate computation result, the first-precision computation result is a double-precision computation result, and the second-precision multiplier is a single-precision multiplier.

In a possible implementation, the input module 740 is configured to:
input the second-precision floating-point numbers in each combination into the second-precision multiplier to obtain a first-precision intermediate computation result corresponding to each combination, and perform format conversion on each first-precision intermediate computation result to obtain a third-precision intermediate computation result corresponding to each combination, where precision of the third-precision intermediate computation result is higher than precision of the first-precision intermediate computation result.

The determining module 750 is configured to:
adjust, based on the exponent bias value corresponding to the second-precision floating-point number in each combination, an exponent of the third-precision intermediate computation result corresponding to each combination, to obtain an adjusted third-precision intermediate computation result; and
perform a summation operation on the adjusted third-precision intermediate computation results corresponding to all the combinations, to obtain a third-precision computation result for the plurality of first-precision floating-point numbers.

In a possible implementation, the input module 740 is configured to:
perform zero padding processing on an exponent and a mantissa of each first-precision intermediate result to obtain the third-precision intermediate computation result corresponding to each combination of second-precision floating-point numbers.

In a possible implementation, the first-precision floating-point number is a single-precision floating-point number, the second-precision floating-point number is a half-precision floating-point number, the first-precision intermediate computation result is a single-precision intermediate computation result, the third-precision intermediate computation result is a double-precision intermediate computation result, the third-precision computation result is a double-precision computation result, and the second-precision multiplier is a half-precision multiplier.

In a possible implementation, the input module 740 is configured to:
input the second-precision floating-point numbers in each combination into the second-precision multiplier to obtain a third-precision intermediate computation result corresponding to each combination, and perform format conversion on each third-precision intermediate computation result to obtain a first-precision intermediate computation result corresponding to each combination.

The determining module 750 is configured to:
adjust, based on the exponent bias value corresponding to the second-precision floating-point number in each combination, an exponent of the first-precision intermediate computation result corresponding to each combination, to obtain an adjusted first-precision intermediate computation result; and
perform a summation operation on the adjusted first-precision intermediate computation results corresponding to all the groups of second-precision floating-point numbers, to obtain a first-precision computation result for the plurality of first-precision floating-point numbers.

In a possible implementation, the first-precision floating-point number is a double-precision floating-point number, the second-precision floating-point number is a half-precision floating-point number, the third-precision intermediate computation result is a single-precision intermediate computation result, the first-precision intermediate computation result is a double-precision intermediate computation result, the first-precision computation result is a double-precision computation result, and the second-precision multiplier is a half-precision multiplier.

It should be noted that the foregoing modules may be implemented by a processor, or may be implemented by a processor together with a memory, or may be implemented by executing a program instruction in a memory by a processor.

It should be noted that division of the foregoing functional modules is only described as an example during floating-point number computation by the floating-point number multiplication computation apparatus provided in the foregoing embodiments. In actual application, the foregoing functions may be allocated, based on a requirement, to be implemented by different functional modules, to be specific, an internal structure of the electronic device is divided into different functional modules to implement all or some of the functions described above. In addition, the floating-point number multiplication computation apparatus provided in the foregoing embodiment and the floating-point number multiplication computation method embodiment belong to a same concept. For a specific implementation process of the apparatus, refer to the method embodiment. Details are not described herein again.

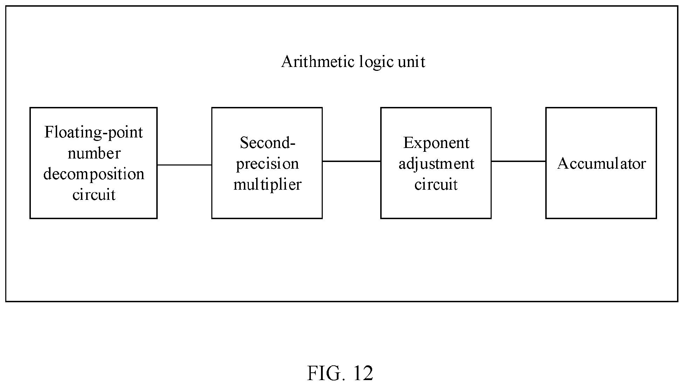

Based on the same technical concept, an embodiment of this application further provides an arithmetic logic unit. The arithmetic logic unit is a hardware computation unit in a processor. As shown in FIG. 12, the arithmetic logic unit includes a floating-point number decomposition circuit, a second-precision multiplier, an exponent adjustment circuit, and an accumulator.

The floating-point number decomposition circuit is configured to: decompose each input to-be-computed first-precision floating-point number into at least two second-precision floating-point numbers, and output, to the exponent adjustment circuit, an exponent bias value corresponding to each second-precision floating-point number, where precision of the second-precision floating-point number is lower than precision of the first-precision floating-point number. The plurality of first-precision floating-point numbers may be successively input into the floating-point number decomposition circuit for decomposition computation, or a plurality of floating-point number decomposition circuits may separately provide decomposition computation for one first-precision floating-point number.

The second-precision multiplier is configured to: receive a combination including two second-precision floating-point numbers obtained by decomposing different first-precision floating-point numbers, perform a multiplication operation on the second-precision floating-point numbers in each combination, and output, to the exponent adjustment circuit, an intermediate computation result corresponding to each combination.

The exponent adjustment circuit is configured to: adjust, based on the exponent bias value corresponding to the second-precision floating-point number in each input combination, an exponent of the intermediate computation result corresponding to each input combination; and output an adjusted intermediate computation result to the accumulator.

The accumulator is configured to: perform a summation operation on the adjusted intermediate computation results corresponding to all the input combinations, and output a computation result for the plurality of first-precision floating-point numbers.

In a possible implementation, the exponent adjustment circuit is configured to: add the exponent bias value corresponding to the second-precision floating-point number in each input combination and the exponent of the intermediate computation result corresponding to each input combination, and output an adjusted intermediate computation result to the accumulator.

In a possible implementation, the intermediate computation result is a first-precision intermediate computation result, and the computation result is a first-precision computation result.

In a possible implementation, the first-precision floating-point number is a single-precision floating-point number, the second-precision floating-point number is a half-precision floating-point number, the first-precision intermediate computation result is a single-precision intermediate computation result, the first-precision computation result is a single-precision computation result, and the second-precision multiplier is a half-precision multiplier; or
the first-precision floating-point number is a double-precision floating-point number, the second-precision floating-point number is a single-precision floating-point number, the first-precision intermediate computation result is a double-precision intermediate computation result, the first-precision computation result is a double-precision computation result, and the second-precision multiplier is a single-precision multiplier.

In a possible implementation, the arithmetic logic unit further includes a format conversion circuit.

The second-precision multiplier is specifically configured to: perform a multiplication operation on the second-precision floating-point numbers in each combination, and output, to the format conversion circuit, a first-precision intermediate computation result corresponding to each combination.

The format conversion circuit is configured to: perform format conversion on each input first-precision intermediate computation result, and output, to the exponent adjustment circuit, a third-precision intermediate computation result corresponding to each combination, where precision of the third-precision intermediate computation result is higher than precision of the first-precision intermediate computation result.

The exponent adjustment circuit is configured to: adjust, based on the exponent bias value corresponding to the second-precision floating-point number in each input combination, an exponent of the third-precision intermediate computation result corresponding to each input combination; and output an adjusted third-precision intermediate computation result to the accumulator.

The accumulator is configured to: perform a summation operation on the adjusted third-precision intermediate computation results corresponding to all the input combinations, and output a third-precision computation result for the plurality of first-precision floating-point numbers.

In a possible implementation, the format conversion circuit is configured to:
perform zero padding processing on an exponent and a mantissa of each input first-precision intermediate computation result, and output, to the exponent adjustment circuit, the third-precision intermediate computation result corresponding to each combination.

In a possible implementation, the first-precision floating-point number is a single-precision floating-point number, the second-precision floating-point number is a half-precision floating-point number, the first-precision intermediate computation result is a single-precision intermediate computation result, the third-precision intermediate computation result is a double-precision intermediate computation result, the third-precision computation result is a double-precision computation result, and the second-precision multiplier is a half-precision multiplier.

In a possible implementation, the arithmetic logic unit further includes a format conversion circuit.

The second-precision multiplier is configured to: perform a multiplication operation on the second-precision floating-point numbers in each combination, and output, to the format conversion circuit, a third-precision intermediate computation result corresponding to each combination.

The format conversion circuit is configured to: perform format conversion on each input third-precision intermediate computation result, and output, to the exponent adjustment circuit, a first-precision intermediate computation result corresponding to each combination.

The exponent adjustment circuit is configured to: adjust, based on the exponent bias value corresponding to the second-precision floating-point number in each input combination, an exponent of the first-precision intermediate computation result corresponding to each input combination; and output an adjusted first-precision intermediate computation result to the accumulator.

The accumulator is configured to: perform a summation operation on the adjusted first-precision intermediate computation results corresponding to all the input combinations, and output a first-precision computation result for the plurality of first-precision floating-point numbers.

In a possible implementation, the first-precision floating-point number is a double-precision floating-point number, the second-precision floating-point number is a half-precision floating-point number, the third-precision intermediate computation result is a single-precision intermediate computation result, the first-precision intermediate computation result is a double-precision intermediate computation result, the first-precision computation result is a double-precision computation result, and the second-precision multiplier is a half-precision multiplier.

In a possible implementation, the arithmetic logic unit further includes a computation mode switching circuit.

The computation mode switching circuit is configured to: when the computation mode switching circuit is set to a second-precision floating-point number computation mode, set the floating-point number decomposition circuit and the exponent adjustment circuit to be invalid.

The second-precision multiplier is configured to: receive a plurality of groups of to-be-computed second-precision floating-point numbers that are input from the outside of the arithmetic logic unit, perform a multiplication operation on each group of second-precision floating-point numbers, and input an intermediate computation result corresponding to each group of to-be-computed second-precision floating-point numbers.

The accumulator is configured to: perform a summation operation on the intermediate computation results corresponding to all the input groups of to-be-computed second-precision floating-point numbers, and output a computation result for the plurality of groups of to-be-computed second-precision floating-point numbers.

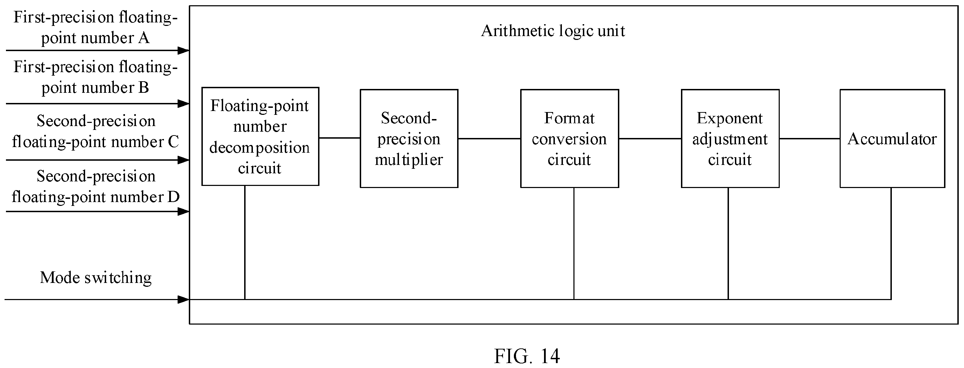

As shown in FIG. 14, the arithmetic logic unit may further support mode switching, that is, switching between a first-precision floating-point number operation mode and a second-precision floating-point number operation mode. In the first-precision floating-point number operation mode, a multiplication operation on the first-precision floating-point number may be implemented by using the floating-point number decomposition circuit, the second-precision multiplier, the format conversion circuit, the exponent adjustment circuit, and the accumulator. In the second-precision floating-point number operation mode, the floating-point number decomposition circuit, the format conversion circuit, and the exponent adjustment circuit may be enabled to be invalid, and only the second-precision multiplier and the accumulator are used. A plurality of groups of to-be-computed second-precision floating-point numbers are directly input into the second-precision multiplier, intermediate computation results corresponding to the plurality of groups of to-be-computed second-precision floating-point numbers are output, and then the intermediate computation results are input into the accumulator for an accumulation operation to obtain a computation result corresponding to the plurality of groups of to-be-computed second-precision floating-point numbers.

It should be noted herein that the logical operation unit provided in the foregoing embodiment and the floating-point number multiplication computation method embodiment belong to a same concept. For a specific implementation process of the logical operation unit, refer to the method embodiment. Details are not described herein again.

Referring to FIG. 8, an embodiment of this application provides an electronic device. The electronic device 800 includes at least one processor 801, a bus system 802, and a memory 803.

The processor 801 may be a general-purpose central processing unit (central processing unit, CPU), a network processor (network processor, NP), a graphics processing unit (graphics processing unit), a microprocessor, an application-specific integrated circuit (application-specific integrated circuit, ASIC), or one or more integrated circuits configured to control program execution of the solutions in this application.

The bus system 802 may include a path to transmit information between the foregoing components.

The memory 803 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium capable of including or storing expected program code in a form of an instruction or a data structure and capable of being accessed by a computer. However, the memory 803 is not limited thereto. The memory may exist independently, and is connected to the processor by using the bus. Alternatively, the memory may be integrated with the processor.

The memory 803 is configured to store application program code for performing the solutions of this application, and execution is controlled by the processor 801. The processor 801 is configured to execute the application program code stored in the memory 803, to implement the floating-point number computation method provided in this application.

During specific implementation, in an embodiment, the processor 801 may include one or more CPUs.

A person of ordinary skill in the art may understand that all or some of the steps of the embodiments may be implemented by hardware or a program instructing related hardware. The program may be stored in a computer-readable storage medium. The computer-readable storage medium may include a read-only memory, a magnetic disk, an optical disc, or the like.

The foregoing description is merely an embodiment of this application, but is not intended to limit this application. Any modification, equivalent replacement, or improvement made without departing from the spirit and principle of this application shall fall within the protection scope of this application.

## Claims

1. An arithmetic logic unit in a processor, wherein the arithmetic logic unit comprises a floating-point number decomposition circuit, a second-precision multiplier, and an accumulator;
the floating-point number decomposition circuit is configured to decompose each input to-be-computed first-precision floating-point number into at least two second-precision floating-point numbers, wherein precision of the second-precision floating-point number is lower than precision of the first-precision floating-point number;
the second-precision multiplier is configured to: receive a combination comprising two second-precision floating-point numbers obtained by decomposing different first-precision floating-point numbers, perform a multiplication operation on the second-precision floating-point numbers in each combination, and output an intermediate computation result corresponding to each combination; and
the accumulator is configured to perform an operation to obtain a computation result for the plurality of to-be-computed first-precision floating-point numbers based on the intermediate computation result corresponding to each combination.

2. The arithmetic logic unit according to claim 1, wherein the operation is a summation operation.

3. The arithmetic logic unit according to claim 1 or 2, wherein the arithmetic logic unit further comprises an exponent adjustment circuit;
the floating-point number decomposition circuit is further configured to output, to the exponent adjustment circuit, an exponent bias value corresponding to each second-precision floating-point number;
the second-precision multiplier is further configured to output, to the exponent adjustment circuit, the intermediate computation result corresponding to each combination; and
the exponent adjustment circuit is configured to: adjust, based on the exponent bias value corresponding to the second-precision floating-point number in each input combination, an exponent of the intermediate computation result corresponding to each input combination; and output an adjusted intermediate computation result to the accumulator.

4. The arithmetic logic unit according to claim 3, wherein the exponent adjustment circuit is configured to: add the exponent bias value corresponding to the second-precision floating-point number in each input combination and the exponent of the intermediate computation result corresponding to each input combination, and output the adjusted intermediate computation result to the accumulator.

5. The arithmetic logic unit according to claim 3, wherein the intermediate computation result is a first-precision intermediate computation result, and the computation result is a first-precision computation result.

6. The arithmetic logic unit according to claim 5, wherein the first-precision floating-point number is a single-precision floating-point number, the second-precision floating-point number is a half-precision floating-point number, the first-precision intermediate computation result is a single-precision intermediate computation result, the first-precision computation result is a single-precision computation result, and the second-precision multiplier is a half-precision multiplier; or
the first-precision floating-point number is a double-precision floating-point number, the second-precision floating-point number is a single-precision floating-point number, the first-precision intermediate computation result is a double-precision intermediate computation result, the first-precision computation result is a double-precision computation result, and the second-precision multiplier is a single-precision multiplier.

7. The arithmetic logic unit according to claim 3, wherein the arithmetic logic unit further comprises a format conversion circuit;
the second-precision multiplier is specifically configured to: perform a multiplication operation on the second-precision floating-point numbers in each combination, and output, to the format conversion circuit, a first-precision intermediate computation result corresponding to each combination;
the format conversion circuit is configured to: perform format conversion on each input first-precision intermediate computation result, and output, to the exponent adjustment circuit, a third-precision intermediate computation result corresponding to each combination, wherein precision of the third-precision intermediate computation result is higher than precision of the first-precision intermediate computation result;
the exponent adjustment circuit is configured to: adjust, based on the exponent bias value corresponding to the second-precision floating-point number in each input combination, an exponent of the third-precision intermediate computation result corresponding to each input combination; and output an adjusted third-precision intermediate computation result to the accumulator; and
the accumulator is configured to: perform a summation operation on the adjusted third-precision intermediate computation results corresponding to all the input combinations, and output a third-precision computation result for the plurality of first-precision floating-point numbers.

8. The arithmetic logic unit according to claim 7, wherein the format conversion circuit is configured to:
perform zero padding processing on an exponent and a mantissa of each input first-precision intermediate computation result, and output, to the exponent adjustment circuit, the third-precision intermediate computation result corresponding to each combination.

9. The arithmetic logic unit according to claim 7 or 8, wherein the first-precision floating-point number is a single-precision floating-point number, the second-precision floating-point number is a half-precision floating-point number, the first-precision intermediate computation result is a single-precision intermediate computation result, the third-precision intermediate computation result is a double-precision intermediate computation result, the third-precision computation result is a double-precision computation result, and the second-precision multiplier is a half-precision multiplier.

10. The arithmetic logic unit according to claim 3, wherein the arithmetic logic unit further comprises a format conversion circuit;
the second-precision multiplier is configured to: perform a multiplication operation on the second-precision floating-point numbers in each combination, and output, to the format conversion circuit, a third-precision intermediate computation result corresponding to each combination;
the format conversion circuit is configured to: perform format conversion on each input third-precision intermediate computation result, and output, to the exponent adjustment circuit, a first-precision intermediate computation result corresponding to each combination;
the exponent adjustment circuit is configured to: adjust, based on the exponent bias value corresponding to the second-precision floating-point number in each input combination, an exponent of the first-precision intermediate computation result corresponding to each input combination; and output an adjusted first-precision intermediate computation result to the accumulator; and
the accumulator is configured to: perform a summation operation on the adjusted first-precision intermediate computation results corresponding to all the input combinations, and output a first-precision computation result for the plurality of first-precision floating-point numbers.

11. The arithmetic logic unit according to claim 10, wherein the first-precision floating-point number is a double-precision floating-point number, the second-precision floating-point number is a half-precision floating-point number, the third-precision intermediate computation result is a single-precision intermediate computation result, the first-precision intermediate computation result is a double-precision intermediate computation result, the first-precision computation result is a double-precision computation result, and the second-precision multiplier is a half-precision multiplier.

12. The arithmetic logic unit according to any one of claims 1 to 11, wherein the arithmetic logic unit further comprises a computation mode switching circuit;
the computation mode switching circuit is configured to: when the computation mode switching circuit is set to a second-precision floating-point number computation mode, set the floating-point number decomposition circuit and the exponent adjustment circuit to be invalid;
the second-precision multiplier is configured to: receive a plurality of groups of to-be-computed second-precision floating-point numbers that are input from the outside of the arithmetic logic unit, perform a multiplication operation on each group of second-precision floating-point numbers, and input an intermediate computation result corresponding to each group of to-be-computed second-precision floating-point numbers; and
the accumulator is configured to: perform a summation operation on the intermediate computation results corresponding to all the input groups of to-be-computed second-precision floating-point numbers, and output a computation result for the plurality of groups of to-be-computed second-precision floating-point numbers.

13. A floating-point number multiplication computation method, wherein the method comprises:
obtaining a plurality of to-be-computed first-precision floating-point numbers;
decomposing each to-be-computed first-precision floating-point number to obtain at least two second-precision floating-point numbers, wherein precision of the second-precision floating-point number is lower than precision of the first-precision floating-point number;
determining various combinations comprising two second-precision floating-point numbers obtained by decomposing different first-precision floating-point numbers;
inputting the second-precision floating-point numbers in each combination into a second-precision multiplier to obtain an intermediate computation result corresponding to each combination; and
determining a computation result for the plurality of to-be-computed first-precision floating-point numbers based on the intermediate computation result corresponding to each combination.

14. The method according to claim 13, after the decomposing each to-be-computed first-precision floating-point number to obtain at least two second-precision floating-point numbers, further comprising:
determining an exponent bias value corresponding to each second-precision floating-point number; and
the determining a computation result for the plurality of to-be-computed first-precision floating-point numbers based on the intermediate computation result corresponding to each combination comprises:
adjusting, based on the exponent bias value corresponding to the second-precision floating-point number in each combination, an exponent of the intermediate computation result corresponding to each combination, to obtain an adjusted intermediate computation result; and
performing a summation operation on the adjusted intermediate computation results corresponding to all the combinations, to obtain the computation result for the plurality of first-precision floating-point numbers.

15. The method according to claim 14, wherein the adjusting, based on the exponent bias value corresponding to the second-precision floating-point number in each combination, an exponent of the intermediate computation result corresponding to each combination, to obtain an adjusted intermediate computation result comprises:
adding the exponent of the intermediate computation result corresponding to each combination of second-precision floating-point numbers and the exponent bias value corresponding to the second-precision floating-point number in each combination, to obtain the adjusted intermediate computation result.

16. The method according to claim 13, wherein the intermediate computation result is a first-precision intermediate computation result, and the computation result is a first-precision computation result.

17. The method according to claim 14, wherein
the inputting the second-precision floating-point numbers in each combination into a second-precision multiplier to obtain an intermediate computation result corresponding to each combination comprises:
inputting the second-precision floating-point numbers in each combination into the second-precision multiplier to obtain a first-precision intermediate computation result corresponding to each combination, and performing format conversion on each first-precision intermediate computation result to obtain a third-precision intermediate computation result corresponding to each combination, wherein precision of the third-precision intermediate computation result is higher than precision of the first-precision intermediate computation result;
the adjusting, based on the exponent bias value corresponding to the second-precision floating-point number in each combination, an exponent of the intermediate computation result corresponding to each combination, to obtain an adjusted intermediate computation result comprises:
adjusting, based on the exponent bias value corresponding to the second-precision floating-point number in each combination, an exponent of the third-precision intermediate computation result corresponding to each combination, to obtain an adjusted third-precision intermediate computation result; and
the performing a summation operation on the adjusted intermediate computation results corresponding to all the combinations, to obtain the computation result for the plurality of first-precision floating-point numbers comprises:
performing a summation operation on the adjusted third-precision intermediate computation results corresponding to all the combinations, to obtain a third-precision computation result for the plurality of first-precision floating-point numbers.

18. The method according to claim 17, wherein the performing format conversion on each first-precision intermediate result to obtain a third-precision intermediate computation result corresponding to each combination comprises:
performing zero padding processing on an exponent and a mantissa of each first-precision intermediate result to obtain the third-precision intermediate computation result corresponding to each combination of second-precision floating-point numbers.

19. The method according to claim 14, wherein the inputting the second-precision floating-point numbers in each combination into a second-precision multiplier to obtain an intermediate computation result corresponding to each combination comprises:
inputting the second-precision floating-point numbers in each combination into the second-precision multiplier to obtain a third-precision intermediate computation result corresponding to each combination, and performing format conversion on each third-precision intermediate computation result to obtain a first-precision intermediate computation result corresponding to each combination;
the adjusting, based on the exponent bias value corresponding to the second-precision floating-point number in each combination, an exponent of the intermediate computation result corresponding to each combination, to obtain an adjusted intermediate computation result comprises:
adjusting, based on the exponent bias value corresponding to the second-precision floating-point number in each combination, an exponent of the first-precision intermediate computation result corresponding to each combination, to obtain an adjusted first-precision intermediate computation result; and
the performing a summation operation on the adjusted intermediate computation results corresponding to all the groups of second-precision floating-point numbers, to obtain the computation result for the plurality of first-precision floating-point numbers comprises:
performing a summation operation on the adjusted first-precision intermediate computation results corresponding to all the groups of second-precision floating-point numbers, to obtain a first-precision computation result for the plurality of first-precision floating-point numbers.

20. A floating-point number multiplication computation apparatus, wherein the apparatus comprises:
an obtaining module, configured to obtain a plurality of to-be-computed first-precision floating-point numbers;
a decomposition module, configured to decompose each to-be-computed first-precision floating-point number to obtain at least two second-precision floating-point numbers, wherein precision of the second-precision floating-point number is lower than precision of the first-precision floating-point number;
a combination module, configured to determine various combinations comprising two second-precision floating-point numbers obtained by decomposing different first-precision floating-point numbers;
an input module, configured to input the second-precision floating-point numbers in each combination into a second-precision multiplier to obtain an intermediate computation result corresponding to each combination; and
a determining module, configured to determine a computation result for the plurality of to-be-computed first-precision floating-point numbers based on the intermediate computation result corresponding to each combination.

21. The apparatus according to claim 20, wherein the decomposition module is further configured to:
determine an exponent bias value corresponding to each second-precision floating-point number; and
the determining module is configured to:
adjust, based on the exponent bias value corresponding to the second-precision floating-point number in each combination, an exponent of the intermediate computation result corresponding to each combination, to obtain an adjusted intermediate computation result; and
perform a summation operation on the adjusted intermediate computation results corresponding to all the combinations, to obtain the computation result for the plurality of first-precision floating-point numbers.

22. The apparatus according to claim 21, wherein the determining module is configured to:
add the exponent of the intermediate computation result corresponding to each combination of second-precision floating-point numbers and the exponent bias value corresponding to the second-precision floating-point number in each combination, to obtain the adjusted intermediate computation result.

23. The apparatus according to claim 20, wherein the intermediate computation result is a first-precision intermediate computation result, and the computation result is a first-precision computation result.

24. The apparatus according to claim 21, wherein the input module is configured to:
input the second-precision floating-point numbers in each combination into the second-precision multiplier to obtain a first-precision intermediate computation result corresponding to each combination, and perform format conversion on each first-precision intermediate computation result to obtain a third-precision intermediate computation result corresponding to each combination, wherein precision of the third-precision intermediate computation result is higher than precision of the first-precision intermediate computation result; and
the determining module is configured to:
adjust, based on the exponent bias value corresponding to the second-precision floating-point number in each combination, an exponent of the third-precision intermediate computation result corresponding to each combination, to obtain an adjusted third-precision intermediate computation result; and
perform a summation operation on the adjusted third-precision intermediate computation results corresponding to all the combinations, to obtain a third-precision computation result for the plurality of first-precision floating-point numbers.

25. The apparatus according to claim 24, wherein the input module is configured to:
perform zero padding processing on an exponent and a mantissa of each first-precision intermediate result to obtain the third-precision intermediate computation result corresponding to each combination.

26. The apparatus according to claim 21, wherein the input module is configured to:
input the second-precision floating-point numbers in each combination into the second-precision multiplier to obtain a third-precision intermediate computation result corresponding to each combination, and perform format conversion on each third-precision intermediate computation result to obtain a first-precision intermediate computation result corresponding to each combination; and
the determining module is configured to:
adjust, based on the exponent bias value corresponding to the second-precision floating-point number in each combination, an exponent of the first-precision intermediate computation result corresponding to each combination, to obtain an adjusted first-precision intermediate computation result; and
perform a summation operation on the adjusted first-precision intermediate computation results corresponding to all the groups of second-precision floating-point numbers, to obtain a first-precision computation result for the plurality of first-precision floating-point numbers.

27. An electronic device, wherein the electronic device comprises a processor and a memory, the memory stores at least one instruction, and the instruction is loaded and executed by the processor to implement an operation performed in the floating-point number multiplication computation method according to any one of claims 13 to 19.

28. A processor, wherein the processor comprises the arithmetic logic unit according to claims 1 to 12.
